# NEUE EUROPÄISCHE PATENTSCHRIFT

(11) **EP 4 061 677 B2**
(45) Veröffentlichungstag und Bekanntmachung des Hinweises auf die Entscheidung über den Einspruch: **28.10.2026**
(45) Hinweis auf die Patenterteilung: 09.08.2023
(21) Anmeldenummer: 20808095.2
(22) Anmeldetag: 17.11.2020
(51) Int. Cl.: B60T 8/32, B60T 13/68

(54) **AUSFALLSICHERHEITSVENTILEINHEIT, ELEKTRONISCH STEUERBARES PNEUMATISCHES BREMSSYSTEM, VERFAHREN ZUM BETREIBEN EINES BREMSSYSTEMS**
REDUNDANCY VALVE UNIT, ELECTRICALLY CONTROLLED PNEUMATIC BRAKE SYSTEM, METHOD FOR CONTROLLING A BRAKE SYSTEM
UNITÉ DE SOUPAPE DE SECURITÉ, SYSTÈME DE FREINAGE PNEUMATIQUE À CONTRÔLE ÉLECTRIQUE, PROCÉDÉ DE COMMANDE D'UN SYSTÈME DE FREINAGE

(30) Priorität: 18.11.2019 DE 102019131112
(43) Veröffentlichungstag der Anmeldung: 28.09.2022
(73) Patentinhaber: ZF CV Systems Global GmbH, 3006 Bern (CH)
(72) Erfinder: OTREMBA, Robert, 30952 Ronnenberg (DE); VAN THIEL, Julian, 30938 Grossburgwedel (DE)
(74) Vertreter: Eisenführ Speiser
(86) Internationale Anmeldenummer: PCT/EP2020/082387
(87) Internationale Veröffentlichungsnummer: WO 2021/099307

(56) Entgegenhaltungen:
- WO-A2-2019/170925
- DE-A1- 10 009 116
- DE-A1- 10 245 916
- DE-A1- 102016 010 464
- DE-A1- 102017 002 718
- DE-A1- 102018 103 605
- DE-B3- 102005 062 907

## Beschreibung

Die vorliegende Erfindung betrifft eine Ausfallsicherheitsventileinheit gemäß dem Oberbegriff des Anspruchs 1.

Die Erfindung betrifft ferner ein elektronisch steuerbares pneumatisches Bremssystem für ein Fahrzeug mit einer derartigen Ausfallsicherheitsventileinheit sowie ein Fahrzeug, insbesondere Nutzfahrzeug, mit einem elektronisch steuerbaren pneumatischen Bremssystem der vorstehend genannten Art. Die Erfindung betrifft auch ein Verfahren zum Betreiben eines Bremssystems der vorstehend genannten Art.

In modernen elektronisch steuerbaren pneumatischen Bremssystemen, die insbesondere bei Nutzfahrzeugen eingesetzt werden, die für einen autonomen Fahrbetrieb vorgesehen sind, ist es wichtig, Maßnahmen bereitzustellen, die bei einem Fehler in dem Bremssystem dennoch ein sicheres Verzögern des Nutzfahrzeugs zulassen. Hier gibt es Ansätze, vollständig redundante Bremssysteme einzusetzen, teilweise redundante Bremssysteme oder nur verschiedene Ebenen in einem Bremssystem, sodass bei einem Fehler in einer ersten Ebene das Bremssystem in einer zweiten Ebene wenigstens eingeschränkt weiterbetrieben werden kann.

Tritt jedoch beispielsweise ein Doppelfehler auf, der sowohl das primäre Bremssystem als auch das redundante Bremssystem betrifft, besteht Gefahr, dass das Nutzfahrzeug nicht mehr kontrolliert gebremst werden kann. Für solche Fälle besteht Bedarf, ein System bereitzustellen, das ein sicheres Verzögern des Fahrzeugs zulässt.

Ein System, das insbesondere auf eine hohe Restverfügbarkeit abzielt, ist beispielsweise aus DE 10 2014 013 756 B3 bekannt. Dort ist eine elektrische Ausrüstung eines Fahrzeugs mit einer wenigstens teilweise elektrischen Bremsund Lenkeinrichtung offenbart, die umfasst: eine elektrische oder elektromechanische Lenkeinrichtung, die mit einem Lenkgetriebe verbunden ist und eine elektronische Lenksteuereinrichtung sowie einen elektrischen Lenksteller umfasst, und eine Betriebsbremseinrichtung. Als Betriebsbremseinrichtung wird in DE 10 2014 013 756 B3 eine elektropneumatische Betriebsbremseinrichtung vorgeschlagen, welche eine elektropneumatische Betriebsbremsventileinrichtung, eine elektronische Bremssteuereinrichtung, elektropneumatische Modulatoren sowie pneumatische Radbremsaktuatoren umfasst, wobei die elektronische Bremssteuereinrichtung die elektropneumatischen Modulatoren elektrisch steuert, um pneumatische Bremsdrücke oder Bremssteuerdrücke für die pneumatischen Radbremsaktuatoren radindividuell, achsindividuell oder seitenindividuell zu erzeugen. Die elektropneumatische Betriebsbremsventileinrichtung weist ein Betriebsbremsbetätigungsorgan, sowie ferner innerhalb eines elektrischen Betriebsbremskreises einen elektrischen Kanal mit einem vom Betriebsbremsbetätigungsorgan betätigbaren elektrischen Bremswertgeber auf. Weiterhin ist eine die Betätigungssignale empfangende elektronische Auswerteeinrichtung vorgesehen, welche abhängig von den Betätigungssignalen Bremsanforderungssignale in die elektronische Bremssteuereinrichtung einsteuert, sowie innerhalb wenigstens eines pneumatischen Betriebsbremskreises wenigstens einen pneumatischen Kanal umfasst, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben in Antwort hierauf es erlaubt, pneumatische Bremsdrücke bzw. Bremssteuerdrücke für die pneumatischen Radbremsaktuatoren zu erzeugen. Die elektronische Auswerteeinrichtung der elektropneumatischen Betriebsbremsventileinrichtung umfasst weiterhin elektronische Steuermittel zum Erzeugen einer zweiten Betätigungskraft, unabhängig von einer Fahrerbremsanforderung, welche bei Vorliegen einer vom Fahrerwunsch unabhängigen Bremsanforderung im Bezug zur ersten Betätigungskraft gleichsinnig oder gegensinnig auf den Steuerkolben wirkt. Die elektropneumatische Betriebsbremseinrichtung wird von einer elektrischen Energiequelle versorgt, welche unabhängig von einer zweiten elektrischen Energiequelle ist, welche die elektropneumatische Betriebsbremsventileinrichtung mit elektrischer Energie versorgt. Hierdurch wird sichergestellt, dass wenigstens eines der beiden Systeme möglichst immer funktioniert. Die elektrische oder elektropneumatische Lenkeinrichtung wird dabei von der zweiten elektrischen Energiequelle mit Energie versorgt. Hierdurch soll eine hohe Restverfügbarkeit erreicht werden. Das System ist allerdings komplex und lässt sich so nicht ohne Weiteres in jedem Nutzfahrzeug umsetzen.

Ein System, das eine elektronisch pneumatisch gesteuerte Redundanz bereitstellt, ist in DE 10 2016 005 318 A1 offenbart. Das dort offenbarte System nutzt ein Bypass-Ventil, um je nach Ausfall eines Subsystems Steuerdrücke weiterzuleiten, um so den jeweils elektrisch ausgefallenen Kreis wenigstens pneumatisch zu versorgen. Auch hierdurch wird die Restverfügbarkeit erhöht. Ähnliche Systems sind in DE 10 2016 010 462 A1 und in DE 10 2016 010 464 A1 offenbart.

Ferner offenbart DE 10 2016 010 463 A1 ein System und Verfahren, bei welchem Vorsteuerventile über ein Redundanzsignal elektronisch angesteuert werden, falls ein Ausfall oder ein Defekt bei der elektronischen Ansteuerung von Radbremsen des Bremssystems festgestellt wird. Das System versucht dabei, das Blockieren von Rädern zu verhindern.

Aus DE 10 2017 002 716, DE 10 2017 002 718, DE 10 2017 002 719 sowie DE 10 2017 002 721 sind Systeme bekannt, bei denen jeweils pneumatisch eine Redundanz erzeugt wird. Hierbei werden verschiedene ausgesteuerte Bremsdrücke, beispielsweise Vorderachs-, Hinterachs- oder Anhängerbremsdrücke genutzt, um diese ausgefallenen Systemen, wie beispielsweise dem Vorderachsbremskreis, Hinterachsbremskreis, Parkbremskreis oder Anhängerbremskreis, als Redundanzdruck bereitzustellen. Auf diese Weise wird eine untergelagerte pneumatische Redundanzebene erzeugt, sodass ebenfalls eine hohe Restverfügbarkeit erreicht wird.

Darüber hinaus existieren auch Systeme, die den Anhänger mit einbeziehen, wie beispielsweise in DE 10 2016 010 461 A1 offenbart. Weitere relevante Bremssysteme sind in DE 102 45 916 A1, DE 100 09 116 A1 und DE 10 2018 103 605 A1 offenbart.

Die vorliegende Erfindung zielt darauf ab, ein System bereitzustellen, welches auch dann noch ein sicheres Stoppen des Fahrzeugs ermöglicht, wenn redundante Systeme, Teilsysteme oder Ebenen des Bremssystems ausgefallen sind. Wird beispielsweise ein Bremssystem über mehrere Stromquellen versorgt, kann es im schlimmsten Fall dazu kommen, dass sämtliche Stromquellen versagen. Auch in diesem Fall soll auf einfache Art und Weise sichergestellt werden, dass das Fahrzeug sicher verzögert werden kann.

Die Erfindung geht aus von einer Ausfallsicherheitsventileinheit für eine Ausfallbremsfunktion eines elektronisch steuerbaren pneumatischen Bremssystems für ein Fahrzeug, insbesondere ein Nutzfahrzeug, wobei das Bremssystem eine erste Steuereinheit und eine zweite Steuereinheit aufweist, die unabhängig voneinander mit Energie versorgt und/oder sich wenigstens teilweise gegenseitig in ihrer Funktion ersetzen können, und die Ausfallsicherheitsventileinheit aufweist:
- ein als monostabiles Ventil ausgebildetes erstes Ausfallbremsventil und ein als monostabiles Ventil ausgebildetes zweites Ausfallbremsventil, und
- eine Ventilhauptleitung, die einen, einen ersten Druck bereitstellenden, Hauptanschluss und einen Ausfallbremsanschluss pneumatisch verbindet.

Erfindungsgemäß ist bei der Ausfallsicherheitsventileinheit gemäß dem ersten Aspekt der Erfindung vorgesehen, dass
- das erste Ausfallbremsventil und das zweite Ausfallbremsventil in der Ventilhauptleitung pneumatisch in Reihe geschaltet sind, und
- das erste Ausfallbremsventil von der ersten Steuereinheit steuerbar ist und das zweite Ausfallbremsventil von der zweiten Steuereinheit steuerbar ist, und
- die Ausfallbremsventile im nicht angesteuerten, insbesondere stromlosen, Zustand in einer Öffnungsstellung geöffnet sind derart, dass der am Hauptanschluss anliegende erste Druck als Ausfallbremsdruck am Ausfallbremsanschluss bereitgestellt wird derart, dass
- in einem Fehlerfall und/oder Stromausfall und/oder Diagnosefall (FT) der Steuereinheiten über das Bereitstellen des Ausfallbremsdrucks am Ausfallbremsanschluss durch das Bremssystem eine Ausfallbremsung des Fahrzeugs ausgelöst wird.

Die Idee der Erfindung liegt darin, ein Bremssystem, insbesondere eine Betriebsbremse des Bremssystems, über einen separaten Ansteuerzweig - zwecks Auslösung einer Ausfallbremsung im Falle eines Mehrfach-, insbesondere Doppelfehlers - ansteuerbar zu halten, wobei der Ansteuerzweig mit der Ausfallsicherheitsventileinheit eine Anzahl von mindestens zwei pneumatisch in Reihe geschalteten, monostabilen und stromlos öffnenden Ausfallbremsventile aufweist. Hierbei ist jeweils ein Ausfallbremsventil einer Steuereinheit zugeordnet, nämlich das erste Ausfallbremsventil einer ersten Steuereinheit und das zweite Ausfallbremsventil einer zweiten Steuereinheit. Die Ausfallbremsventile werden also jeweils von unterschiedlichen, voneinander unabhängigen Steuereinheiten im angesteuerten Zustand durch ein Steuersignal in einem Sperrzustand gehalten. Die Steuereinheiten werden dabei insbesondere unabhängig voneinander mit Energie versorgt. Dass sich die Steuereinheiten wenigstens teilweise gegenseitig in ihrer Funktion ersetzen können bedeutet insbesondere, dass die zweite Steuereinheit im Sinne einer Rückfallebene in redundanter Weise Funktionen der ersten Steuereinheit bereitstellen kann, falls die erste Steuereinheit ausfallen sollte. Im Falle eines Mehrfachfehlers, d. h. eines Fehlers, der mehrere Steuereinheiten betrifft, und insbesondere eines Doppelfehlers, der ein Primärsystem mit der ersten Steuereinheit und eine erste Rückfallebene mit der zweiten Steuereinheit betrifft, kann die Ausfallsicherheitsventileinheit aufgrund des monostabilen, stromlos öffnenden Verhaltens der Ausfallbremsventile im nicht angesteuerten Zustand, das heißt bei dem Ausbleiben des Steuersignals für die Ausfallbremsventile, einen - an einem Hauptanschluss anliegenden - ersten Druck als Ausfallbremsdruck an einem Ausfallbremsanschluss für das Bremssystem bereitstellen.

Die Erfindung schließt die Erkenntnis ein, dass bei mehreren Subsystemen eines Bremssystems mit jeweils unabhängigen Steuereinheiten ein Fehler vorteilhaft durch das Ausbleiben eines Steuersignals für das jeweilige der Steuereinheit zugeordneten Ausfallbremsventil äußern kann. Dies kann beispielsweise bei einem Stromausfall der Fall sein, d. h. wenn die Stromversorgung für die Steuereinheit ausgefallen ist. Auch kann die Steuereinheit derart ausgebildet sein, dass im Falle eines Ausnahmefehlers, insbesondere einem Fall, in dem die Steuerlogik die Sicherheit des Fahrzeugs nicht mehr gewährleistet werden kann, ein Nullsignal als Steuersignal für das Ausfallbremsventil ausgegeben wird und somit ein Nichtvorhandensein des Steuersignals simuliert wird.

Wenn dies der Fall ist, wenn also an beiden Subsystemen ein Fehler, insbesondere in Form eines Ausnahmefehlers oder Stromausfalls, vorliegt, gewährleistet die Ausfallsicherheitsventileinheit also durch das Bereitstellen eines Ausfallbremsdrucks ein sicheres Verzögern des Fahrzeugs. Hierbei stellt ein Doppelfehler einen Sonderfall des Mehrfachfehlers dar, bei dem zwei Subsysteme gleichzeitig von einem Fehler betroffen sind.

Auch können im Rahmen der Erfindung, durch das Vorsehen einer größeren Anzahl von pneumatisch in Reihe geschalteten Ausfallbremsventilen in der Ausfallsicherheitsventileinheit, eine entsprechende größere Anzahl von Subsystemen bei einem Mehrfachfehler berücksichtigt werden.

Ferner können an den verschiedenen Steuereinheiten für das Vorliegen eines Mehrfachfehlers unterschiedliche Fehlertypen vorliegen, beispielsweise ein Ausnahmefehler in der ersten Steuereinheit und ein Stromausfall in der zweiten Steuereinheit. Wichtig ist nur, dass sämtliche vom Mehrfachfehler betroffenen Steuereinheiten zum Zeitpunkt des Mehrfachfehlers ausfallen, das heißt nicht mehr einsatzfähig sind, und sich dies in einem Ausbleiben des jeweiligen Steuersignals äußert.

Die Ausfallventileinheit wird im Rahmen der Erfindung mindestens aus der Reihenschaltung des ersten und zweiten Ausfallventils gebildet, das heißt die Ausfallventileinheit weist im Rahmen der Erfindung in ihrer minimalen Ausprägung eine Reihenschaltung von erstem und zweitem Ausfallventil auf.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Gemäß der Erfindung sind das erste Ausfallbremsventil und das zweite Ausfallbremsventil als 3/2-Wege-Magnetventile ausgebildet. In dieser erfindungsgemäßen Gestaltung kann der Effekt gemäß dem Konzept der Erfindung, dass das Ausfallbremsventil im nicht angesteuerten Zustand selbsttätig in eine Öffnungsstellung schaltet, vorteilhaft erzielt werden, weil der Magnetteil des Ventils im nicht angesteuerten Zustand stromlos bleibt und somit das Ventil, insbesondere durch eine Rückstellfeder, wieder in die Öffnungsstellung bewegt wird.

Bevorzugt ist ein in der Ventilhauptleitung angeordnetes Bistabilventil vorgesehen, ausgebildet zum Umschalten zwischen einer ersten, die Ventilhauptleitung sperrenden oder mit einer Entlüftung verbindenden, Stellung und einer zweiten, die Ventilhauptleitung verbindenden Stellung. Mittels eines solchen Bistabilventils kann die Ausfallsicherheitsventileinheit vorteilhaft sowohl in einem für einen automatischen Betrieb des Fahrzeugs geeigneten Modus, als auch für einen manuellen Betrieb des Fahrzeugs geeigneten Modus betrieben werden. Insbesondere ist das Bistabilventil derart ausgebildet, dass in der ersten, die Ventilhauptleitung sperrenden Stellung die Ventilhauptleitung an einem ersten Bistabilventilanschluss pneumatisch mit einer Entlüftung des Bistabilventils verbunden, und dabei die Ventilhauptleitung an einem zweiten Bistabilventilanschluss gesperrt ist, und in einer zweiten, die Ventilhauptleitung pneumatisch verbindenden Stellung die Ventilhauptleitung zwischen dem ersten und zweiten Bistabilventilanschluss pneumatisch verbunden, und dabei die Entlüftung des Bistabilventils gesperrt ist.

Wenn sich das Bistabilventil in einer ersten, die Ventilhauptleitung sperrenden Stellung befindet, wird unabhängig von der Stellung der Ausfallbremsventile ein Bereitstellen eines Ausfallbremsdrucks am Ausfallbremsanschluss der Ausfallsicherheitsventileinheit per se verhindert. In dieser ersten Stellung wird also eine Ausfallbremsung, die durch einen Doppelfehler hervorgerufen würde, verhindert. Dies kann insbesondere bei einem manuellen Betrieb des Fahrzeugs vorteilhaft der Fall sein, insbesondere wenn ein menschlicher Fahrer die Kontrollhoheit über das Fahrzeug behalten soll. Im Unterschied dazu kann das Bistabilventil in eine zweite, die Ventilhauptleitung pneumatisch verbindende Stellung geschaltet werden, damit - wenn sich sämtliche Ausfallbremsventile der Ausfallsicherheitsventileinheit in einer Öffnungsstellung befinden, der Ausfallbremsdruck am Ausfallbremsanschluss zur Auslösung einer Ausfallbremsung des Fahrzeugs bereitgestellt werden kann. Gemäß dem Konzept eines Bistabilventils verharrt dieses in seiner Schaltstellung, und zwar auch im stromlosen Zustand und insbesondere unabhängig von etwaigen Fehlerfällen im Bremssystem. Das Bistabilventil wird insbesondere über eine Ventil-Steuereinheit gesteuert, welche wiederum mit einer Steuereinheit des Bremssystems und/oder mit einem Fahrzeug-Bus signal- und/oder energieleitend verbunden ist.

Die Erfindung wird weitergebildet durch einen Drucksensor, wobei der Drucksensor in einer sich vom Hauptanschluss zum Ausfallbremsanschluss gerichteten Strömungsrichtung hinter dem ersten und dem zweiten Ausfallbremsventil angeordnet ist. Mittels eines in Strömungsrichtung hinter den Ausfallbremsventilen angeordneten Drucksensors kann vorteilhaft die Funktionsweise der Ausfallbremsventile überprüft und/oder plausibilisiert werden. Insbesondere kann der Drucksensor mit einer Ventil-Steuereinheit der Ausfallsicherheitsventileinheit oder einer anderen Steuereinheit des Bremssystems oder einem FahrzeugBus des Fahrzeugs verbunden sein, um dort ein entsprechendes Drucksignal bereitzustellen.

Vorzugsweise ist ein Druckbegrenzungsventil vorgesehen, ausgebildet zum Begrenzen des ersten Drucks und/oder des Ausfallbremsdrucks. Mittels eines Druckbegrenzungsventils kann ein am Hauptanschluss bereitgestellter erster Druck auf einen insbesondere für eine Ausfallbremsung geeigneten Ausfallbremsdruck begrenzt werden.

Die Erfindung wird weitergebildet durch eine Ausfallbremsdruck-Einstelleinrichtung, ausgebildet zum steuerbaren Einstellen des Ausfallbremsdrucks. Mittels einer Ausfallbremsdruck-Einstelleinrichtung kann - analog zum Druckbegrenzer - der am Hauptanschluss bereitgestellte erste Druck auf einen für eine Ausfallbremsung geeigneten Ausfallbremsdruck begrenzt werden, jedoch mit dem Unterschied, dass die Begrenzung und somit die Höhe des Ausfallbremsdrucks im Betrieb des Fahrzeugs angepasst werden kann. Somit kann vorteilhaft in Abhängigkeit unterschiedlicher Betriebsbedingungen, insbesondere Ladebedingungen des Fahrzeugs oder Straßen- und Umgebungsbedingungen, ein für eine unter diesen Betriebsbedingungen auftretende Ausfallbremsung geeigneter Einstelldruck als Ausfallbremsdruck eingestellt werden. Sollte es somit zu einer Notbremsung bzw. einer Ausfallbremsung im Falle eines Mehrfachfehlers kommen, so wird das Fahrzeug unter möglichst geeigneten und sicheren Bedingungen zum Stillstand gebracht. Beispielsweise kann mittels einer Ausfallbremsdruck-Einstelleinrichtung bei einem schwer beladenen Fahrzeug ein höherer Ausfallbremsdruck vorgesehen werden.

Vorteilhaft ist vorgesehen, dass die Ausfallbremsdruck-Einstelleinrichtung ausgebildet ist, den Ausfallbremsdruck in Abhängigkeit eines Betriebsprofils einzustellen, wobei das Betriebsprofil insbesondere auf Basis mindestens eines der folgenden Parameter gebildet wird: Fahrzeugkombination, Beladungssituation, Straßenverhältnisse, Reibwert. Mittels eines Betriebsprofils können beispielsweise voreingestellte, für typische Betriebsbedingungen geeignete Werte für einen Ausfallbremsdruck ausgewählt und eingestellt werden. Dies kann insbesondere in einer für einen Fahrer des Fahrzeugs verständlichen Weise über ein Eingabemodul der Fahrzeugsteuerung, beispielsweise am Armaturenbrett des Fahrzeugs oder einem Bordcomputer erfolgen. Beispielsweise kann der Fahrer vor Beginn einer Fahrt durch Abfrage in einem Kontextmenü die Beladung seines Fahrzeugs angeben, worauf hin eine Steuereinheit oder ECU der Fahrzeugsteuerung oder des Bremssystems ein geeignetes Betriebsprofil einschließlich des Ausfallbremsdrucks berechnet.

Vorteilhaft ist vorgesehen, dass die Ausfallbremsdruck-Einstelleinrichtung als pneumatische Einstelleinrichtung ausgebildet ist. Eine Weiterbildung mit pneumatischer Einstelleinrichtung weist vorzugsweise eine Relaisventilanordnung auf. Insbesondere ist die Relaisventilanordnung ausgebildet zur steuerbaren Einstellung eines Einstelldrucks, und weist insbesondere ein Steuerventil und ein Halteventil auf, mittels denen ein Steuerdruck an einem Steueranschluss des Relaisventils gehalten werden kann. Auf diese Weise kann ein pneumatisch einstellbarer Ausfallbremsdruck in Form eines Einstelldrucks bereitgestellt werden. Das Steuerventil und das Halteventil können vorteilhaft über eine Ventil-Steuereinheit gesteuert werden. Die Ventil-Steuereinheit kann dabei insbesondere im Sinne eines Regelkreises auf Basis eines gemessenen Drucks über ein Öffnen und Schließen des Steuer-und Halteventils einen am Relaisventil ausgesteuerten Einstelldruck einstellen. Der Druck kann entsprechend über einen Drucksensor gemessen werden, welcher pneumatisch mit einem zweiten Relaisventilanschluss, an dem der Einstelldruck ausgesteuert wird, verbunden ist.

Die Erfindung kann weiter durch ein Wechselventil weitergebildet werden, mittels welchem zum einen ein Einstelldruck oder zum anderen ein am Hauptanschluss bereitgestellter erster Druck, insbesondere ein durch ein Druckbegrenzungsventil bereitgestellter Begrenzungsdruck, an einem dritten Wechselventilanschluss der weiteren Ventilhauptleitung und schließlich dem Ausfallbremsanschluss bereitgestellt werden kann. Das Wechselventil kann insbesondere derart ausgebildet sein, dass von einem ersten und einem zweiten Wechselventilanschluss derjenige Wechselventilanschluss, an dem der höhere Druck anliegt, pneumatisch mit dem dritten Wechselventilanschluss verbunden wird.

Vorteilhaft ist vorgesehen, dass die Ausfallbremsdruck-Einstelleinrichtung als elektrische Einstelleinrichtung ausgebildet ist. Eine elektrische Einstelleinrichtung kann insbesondere eine Motorventilanordnung aufweisen. Insbesondere kann eine solche Motorventilanordnung durch ein mittels eines Elektromotors elektrisch steuerbar verstellbares Druckbegrenzungsventil gebildet sein. Ein derartiger Elektromotor kann über eine Ventil-Steuereinheit ansteuerbar sein.

Bevorzugt ist eine Ventil-Steuereinheit vorgesehen, wobei die Ventil-Steuereinheit ausgebildet ist zum steuernden und/oder regelnden Einstellen der Ausfallbremsdruck-Einstelleinrichtung. Mittels einer Ventil-Steuereinheit kann vorteilhaft die Ausfallbremsdruck-Einstelleinrichtung auf Basis einer Vorgabe derart angesteuert werden, dass ein geeigneter Ausfallbremsdruck durch die Ausfallsicherheitsventileinheit bereitgestellt wird. Eine solche Vorgabe kann insbesondere durch ein Betriebsprofil gegeben sein, das in der Ventil-Steuereinheit, insbesondere in einem Betriebsprofilspeicher, hinterlegt werden kann.

In einer bevorzugten Weiterbildung ist vorgesehen, dass der Hauptanschluss zum Empfangen eines ausgesteuerten Feststell-Bremsdrucks oder eines von diesem abgeleiteten Drucks als erster Druck pneumatisch mit einer Feststellbremsfunktion verbunden ist. Die Weiterbildung schließt die Erkenntnis ein, dass ein andauerndes Halten des gebremsten Zustands des Fahrzeugs wichtig für die Sicherheit des Fahrzeugs ist. Nach einer Ausfallbremsung durch die Ausfallsicherheitsventileinheit kann es zu einer Leckage in dem - die Ausfallbremsung durchführenden - Betriebsbremskreis, insbesondere in einer Steuerleitung eines pneumatischen Vorderachsbremskreises, oder an einem Vorderachsmodulator oder an einer anderen Stelle in einem separaten Ansteuerzweig, in dem die Ausfallsicherheitsventileinheit angeordnet ist, kommen. Bei einer solchen Leckage kann es - wenn sich der angeschlossene Druckvorrat fortschreitend entleert - zu einem Abfallen des Ausfallbremsdrucks und dadurch zu einem Nachlassen der Wirkung der Ausfallbremsung kommen.

Dadurch, dass der Hauptanschluss zum Empfangen eines ausgesteuerten Feststell-Bremsdrucks als erster Druck pneumatisch mit einer Feststellbremsfunktion verbunden ist, wird vorteilhaft erreicht, dass bei einer auftretenden Leckage nach einer Ausfallbremsung durch die Ausfallsicherheitsventileinheit der mindestens eine Feststellbremszylinder ebenfalls mit dem leckagebehafteten Teil pneumatisch verbunden ist. Eine Leckage führt durch die eine gemäß der Weiterbildung ausgebildete Ausfallsicherheitsventileinheit somit zu einem Einfallen der Feststellbremse und dadurch zu einem sicheren Halten des gebremsten Zustands des Fahrzeugs. Das Einfallen der Feststellbremse wird durch ein Entlüften des Feststellbremszylinders und ein Wirken einer sich dabei entspannenden Druckfeder auf eine Radbremse erreicht.

Durch eine gemäß der Weiterbildung ausgebildete Ausfallsicherheitsventileinheit wird also die pneumatische Verbindung von einem - die Ausfallbremsung durchführenden - Betriebsbremskreis, insbesondere einem Vorderachsbremskreis der Betriebsbremse, mit dem ausgesteuerten Feststell-Bremsdruck gezielt genutzt, um bei einem auftretenden Druckverlust die nachlassende Wirkung des - die Ausfallbremsung durchführenden - Betriebsbremskreises durch die einsetzende Wirkung der Feststellbremse zu kompensieren. Dieser Prozess kann insbesondere relativ langsam, im Bereich von Stunden oder sogar Tagen, ablaufen, insbesondere abhängig von der Größe der Leckage.

Insbesondere umfasst das Feststellbremssystem und/oder die Feststellbremsfunktion ein Feststell-Bremsmodul. Die Feststellbremsfunktion ist vorzugsweise ausgebildet, einen Feststellbremsdruck zum Belüften von Feststellbremszylindern auszusteuern. Die Feststellbremsfunktion wird vorzugsweise von einem Feststell-Bremsmodul bereitgestellt. In Weiterbildungen kann die Feststellbremsfunktion von einer anderen pneumatischen oder elektropneumatischen Einrichtung bereitgestellt werden, beispielsweise einem Achsmodulator, einem Anhängersteuermodul oder dergleichen pneumatischen oder elektropneumatischen Einrichtung.

Insbesondere ist der Hauptanschluss pneumatisch mit einem Feststellbremszylinder, bevorzugt mit zwei, jeweils auf einer Fahrzeugseite angeordneten, Feststellbremszylindern verbunden. Insbesondere ist der Hauptanschluss pneumatisch mit mindestens einer Feststellbremskammer des Feststellbremszylinders verbunden.

Die Erfindung wird durch ein Auswahlventil weitergebildet mit einem ersten Anschluss, der zum Empfangen des ersten Drucks mit der Feststellbremsfunktion, insbesondere einem Feststellbremssystem und/oder dem Feststell-Bremsmodul, pneumatisch verbunden ist,
- mit einem zweiten Anschluss, der zum Empfangen eines weiteren Vorratsdrucks als zweiter Druck pneumatisch mit einem weiteren Druckluftvorrat verbunden ist, und
- mit einem dritten Anschluss, der pneumatisch mit dem Ausfallbremsventil verbunden ist, wobei
- das Auswahlventil ausgebildet ist, denjenigen von dem ersten und zweiten Anschluss pneumatisch mit dem dritten Anschluss zu verbinden, an dem der höhere Druck anliegt und insbesondere den jeweils anderen Anschluss zu sperren.

Eine Weiterbildung mit einem Auswahlventil schließt die Erkenntnis ein, dass eine redundante Versorgung der Ausfallsicherheitsventileinheit mit Druckluft die Sicherheit des Fahrzeugs vorteilhaft erhöht. Mittels eines Auswahlventils mit einem ersten Anschluss der zum Empfangen des ersten Drucks mit einem Feststellbremssystem pneumatisch verbunden ist, kann vorteilhaft die Verfügbarkeit einer ersten Druckluftquelle zum Bereitstellen eines Ausfallbremsdrucks bereitgestellt werden, die insbesondere unabhängig von der im Normalbetrieb verwendeten Druckluftquelle des Bremskreises ist, insbesondere eines Betriebsbremskreises, dem der Ausfallbremsdruck bereitgestellt wird. Somit wird bereits vorteilhaft eine Redundanz durch die Verwendung eines separaten Bremskreises erreicht.

Mittels eines zweiten Anschlusses des Auswahlventils, der zum Empfangen eines weiteren Vorratsdrucks als zweiter Druck pneumatisch mit einem weiteren Druckluftvorrat verbunden ist, wird vorteilhaft eine noch weitere, unabhängig vom Feststellbremssystem vorhandene Druckluftquelle als noch weitere Redundanz bereitgestellt. Der weitere Druckluftvorrat kann dabei insbesondere auch ein Druckluftvorrat des Betriebsbremssystems sein.

Dadurch, dass das Ausfallbremsventil einen dritten Anschluss aufweist, der pneumatisch mit dem Ausfallbremsventil verbunden ist, und das Ausfallbremsventil ausgebildet ist, denjenigen von dem ersten und zweiten Anschluss pneumatisch mit dem dritten Anschluss zu verbinden, an dem der höhere Druck anliegt, wird vorteilhaft auch bei einem Ausfall von einer Druckluftquelle an einem von dem ersten und zweiten Anschluss die andere, verfügbare Druckluftquelle automatisch mit dem Ausfallbremsventil verbunden.

Durch das Auswahlventil wird somit die Verfügbarkeit der Ausfallbremsfunktion und somit die Sicherheit des Fahrzeugs vorteilhaft noch weiter erhöht.

Bevorzugt ist vorgesehen, dass der Ausfallbremsdruck als Steuerdruck für einen Achsmodulator, insbesondere für einen Vorderachsmodulator, bereitgestellt wird, oder der Ausfallbremsdruck als Bremsdruck für einen Bremszylinder bereitgestellt wird. Wenn der Ausfallbremsdruck als Bremsdruck für einen Bremszylinder bereitgestellt wird, kann vorteilhaft eine vollständige Versorgung der für die Ausfallbremsung benötigten Druckluft mittels der Ausfallsicherheitsventileinheit erreicht werden, wenn insbesondere der Bremszylinder vollständig mittels der von der Ausfallsicherheitsventileinheit bereitgestellten Druckluft mit dem Ausfallbremsdruck aktiviert wird. Wenn der Ausfallbremsdruck als Bremsdruck für einen Modulator bereitgestellt wird, wirkt der Ausfallbremsdruck insbesondere auf einen Steueranschluss des Modulators, wobei der Modulator insbesondere luftmengenverstärkend wirkt und insbesondere von einer weiteren Druckluftquelle bzw. Druckluftvorrat versorgt wird. Der Steueranschluss des Modulators ist insbesondere ein Redundanzanschluss des Modulators.

In einem zweiten Aspekt gibt die Erfindung zur Lösung der Aufgabe weiterhin ein elektronisch steuerbares pneumatisches Bremssystem für ein Fahrzeug, insbesondere ein Nutzfahrzeug an, aufweisend eine erste Steuereinheit für ein Primärsystem und eine zweite Steuereinheit für eine erste Rückfallebene, wobei die erste Steuereinheit und die zweite Steuereinheit unabhängig voneinander mit Energie versorgt und/oder sich wenigstens teilweise gegenseitig in ihrer Funktion ersetzen können. Bei dem elektronisch steuerbaren pneumatischen Bremssystem ist eine Ausfallsicherheitsventileinheit gemäß wenigstens einer der vorstehend beschriebenen bevorzugten Ausführungsformen einer Ausfallsicherheitsventileinheit gemäß dem ersten Aspekt der Erfindung vorgesehen, wobei
- die Ausfallsicherheitsventileinheit in einem separaten Ansteuerzweig angeordnet ist und
- zur Bereitstellung eines Ausfallbremsdrucks zum Auslösen einer Ausfallbremsung des Fahrzeugs über einen Ausfallbremsanschluss mit mindestens einem Bremszylinder pneumatisch verbindbar ist. Bei dem Bremssystem werden die Vorteile der Ausfallsicherheitsventileinheit vorteilhaft genutzt. "Separater Ansteuerzweig" bedeutet hier, dass die Ausfallsicherheitsventileinheit in einem zusätzlichen pneumatischen Ansteuerzweig angeordnet ist, der separat zu einem primären, insbesondere einen Bremswertgeber aufweisenden, pneumatischen Ansteuerzweig gebildet ist. Insbesondere wird der Ausfallbremsdruck für einen Achsmodulator oder für einen Bremszylinder bereitgestellt.

In einer Weiterbildung des elektronisch steuerbaren pneumatischen Bremssystems ist vorgesehen, dass die erste Steuereinheit mit einem ersten Ausfallbremsventil der Ausfallsicherheitsventileinheit ansteuerbar verbunden ist und die zweite Steuereinheit mit einem zweiten Ausfallbremsventil der Ausfallsicherheitsventileinheit ansteuerbar verbunden ist. In einer derartigen Weiterbildung können die jeweiligen Ausfallbremsventile der Ausfallsicherheitsventileinheit gemäß dem ersten Aspekt der Erfindung vorteilhaft durch zwei unabhängige Steuereinheiten angesteuert werden.

In einer Weiterbildung des elektronisch steuerbaren pneumatischen Bremssystems ist vorgesehen, dass der Hauptanschluss zum Empfangen eines ausgesteuerten Feststell-Bremsdrucks oder eines von diesem abgeleiteten Drucks als erster Druck pneumatisch mit einer Feststellbremsfunktion verbunden ist.

In einer Weiterbildung des elektronisch steuerbaren pneumatischen Bremssystems ist ein Druckluftspeicher vorgesehen, der einen ersten Druck bereitstellt, wobei der Druckluftspeicher unabhängig von einem weiteren, dem Achsmodulator für den Betrieb zugeordneten Druckluftvorrat ist. Insbesondere ist der Druckluftspeicher unabhängig von einem, einem Betriebsbremssystem des Bremssystems zugeordneten, Druckluftvorrat, und somit beispielsweise durch einen, einem Feststellbremssystem zugeordneten Druckluftspeicher gebildet. In einer derartigen Weiterbildung kann vorteilhaft die Unabhängigkeit der Ausfallsicherheitsventileinheit bzw. der Ausfallbrems-Funktionalität erhöht werden, weil die Druckluft zum Aktuieren der Betriebsbremszylinder zur Durchführung einer Ausfallbremsung aus einem Druckluftspeicher entnommen wird, der im Normalbetrieb einem anderen Subsystem des Bremssystems, insbesondere einem Feststellbremssystem, zugeordnet ist. Vorzugsweise ist der Druckluftspeicher unabhängig von einem Druckluftvorrat, der einem Vorderachsmodulator zugeordnet ist.

Die Erfindung führt in einem dritten Aspekt zur Lösung der Aufgabe weiterhin auf ein Fahrzeug, insbesondere Nutzfahrzeug, mit einem Bremssystem gemäß dem Konzept der Erfindung. Bei dem Fahrzeug werden die Vorteile der Ausfallsicherheitsventileinheit vorteilhaft genutzt.

Die Erfindung führt in einem vierten Aspekt zur Lösung der Aufgabe weiterhin auf ein Verfahren zum Betreiben eines Bremssystems, aufweisend den Schritt:
- Vorhalten eines ersten Drucks in einer, pneumatisch in einem separaten Ansteuerzweig angeordneten, Ausfallsicherheitsventileinheit. Bei dem Verfahren ist vorgesehen, dass
- der erste Druck durch ein Ansteuern von mindestens einem ersten und einem zweiten, pneumatisch in Reihe geschalteten Ausfallbremsventil zurückgehalten wird, und
- im Fall eines Mehrfachfehlers, insbesondere Doppelfehlers, oder eines Diagnosefalls der erste Druck, durch ein Unterbrechen des Ansteuerns der mindestens zwei Ausfallbremsventile, als Ausfallbremsdruck mindestens einem Bremszylinder des Bremssystems zur Auslösung einer Ausfallbremsung bereitgestellt wird.

Bei dem Verfahren werden die Vorteile der Ausfallsicherheitsventileinheit vorteilhaft genutzt.

In einer Weiterbildung des Verfahrens ist vorgesehen, dass das Unterbrechen des Ansteuerns durch ein Stromlosschalten des mindestens ersten und zweiten Ausfallbremsventils erfolgt. Mit Stromlosschalten ist hier gemeint, dass die mindestens zwei Ausfallbremsventile in einen Zustand gebracht werden, in dem die Aktoren, insbesondere Magnetteile der Ausfallbremsventile nicht bestromt, das heißt stromlos sind.

In einer Weiterbildung des Verfahrens ist vorgesehen, dass der Ausfallbremsdruck in Abhängigkeit eines Betriebsprofils eingestellt wird.

Vorzugsweise ist die Ausfallsicherheitsventileinheit im Rahmen des Verfahrens gemäß dem vierten Aspekt der Erfindung gemäß wenigstens einer der vorstehend beschriebenen bevorzugten Ausführungsformen einer Ausfallsicherheitsventileinheit nach dem ersten Aspekt der Erfindung ausgebildet. Vorzugsweise ist das Bremssystem im Rahmen des Verfahrens gemäß dem vierten Aspekt der Erfindung nach Bremssystem gemäß dem dritten Aspekt der Erfindung ausgebildet.

In einer Weiterbildung des Verfahrens ist vorgesehen, dass der Ausfallbremsdruck ein von einer Feststellbremsfunktion des Bremssystems ausgesteuerter Feststellbremsdruck zum Belüften von Feststellbremszylindern oder ein von diesem abgeleiteter Druck ist.

In einer Weiterbildung des Verfahrens gemäß dem vierten Aspekt der Erfindung ist ein Diagnoseablauf vorgesehen, aufweisend den Schritt:
- Ermitteln des Ausfallbremsdrucks, vorzugsweise mittels eines Drucksensors am Ausfallbremsanschluss, wobei
- vor dem Unterbrechen des Bereitstellens des Signals, vorzugsweise in einem Diagnosefall der Steuereinheit, eine Druckaussteuerung im Betriebsbremssystem, vorzugsweise eine Bremsanforderung an einen Achsmodulator, angefordert wird.

Insbesondere umfasst ein Diagnosefall einen Diagnoseablauf. Der Diagnosefall stellt dabei im Unterschied zu dem Fehlerfall und dem Stromausfall einen bewusst beigeführten Zustand einer Steuereinheit, insbesondere der ersten und zweiten Steuereinheit, zu Diagnosezwecken dar, bei dem vorzugsweise der Zustand des Signals oder der Signale zum Aussperren eines für eine Ausfallbremsung wirksamen Ausfallbremsdrucks dem Zustand bei einem Fehlerfall und/oder Stromausfall entspricht. Vorzugsweise wird in einem Diagnosefall das Bereitstellens des Signals zum Aussperren eines für eine Ausfallbremsung wirksamen Ausfallbremsdrucks unterbrochen.

Vorzugsweise wird die Bremsanforderung von einem Bremswertgeber bereitgestellt. Insbesondere wird die Bremsanforderung über einen Fahrzeug-Datenbus bereitgestellt. Vorzugsweise die Bremsanforderung und/oder die Anforderung einer Druckaussteuerung im Betriebsbremssystem in Form eines XBR-Signals oder dergleichen Signal eines Fahrzeug-Datenbus.

Dadurch, dass vor dem Unterbrechen des Bereitstellens des Signals eine Druckaussteuerung im Betriebsbremssystem, insbesondere eine Bremsanforderung an einen Achsmodulator, angefordert wird, wird vorteilhaft ein möglicher Plausibilitätsfehler im Bremssystem, insbesondere in der Steuereinheit, vermieden. Ein solcher Plausibilitätsfehler würde, insbesondere durch die Steuereinheit, festgestellt, wenn ein Druck in das Betriebsbremssystem durch die Ausfallsicherheitsventileinheit eingesteuert wird, ohne dass eine dazu korrespondierende Bremsanforderung wie z.B. eine Auslenkung des Bremswertgebers, insbesondere eines Bremspedals, erfolgt. Der in das Betriebsbremssystem eingesteuerte Druck kann insbesondere über einen Achsmodulator-Drucksensor gemessen werden.

Mittels des Diagnoseablaufs kann eine korrekte Funktionsweise der Ausfallsicherheitsventileinheit vorteilhaft geprüft bzw. sichergestellt werden. Der Diagnoseablauf kann auf verschiedene Weise veranlasst werden. Zum einen kann bei einer im Betrieb des Fahrzeugs durch eine Bremsanforderung veranlassten Bremsung der Diagnoseablauf durchgeführt werden. Dies ist beispielsweise der Fall, wenn ein Fahrer über den Bremswertgeber - oder die Steuereinheit in einem automatischen Fahrbetrieb - eine elektronische Bremsanforderung an einen Achsmodulator sendet.

Insbesondere wird die Druckaussteuerung elektrisch oder elektronisch angefordert wird über die Steuereinheit und eine elektrische Achsmodulator-Steuerleitung, insbesondere eine elektrische Vorderachsmodulator-Steuerleitung oder elektrische Hinterachsmodulator-Steuerleitung. Insbesondere ist die Bremsanforderung eine elektrische oder elektronische Bremsanforderung.

Vorzugsweise ist vorgesehen, dass die Ausfallsicherheitsventileinheit pneumatisch von einem Bremskreis versorgt wird, der unabhängig von dem die Ausfallbremsung durchführenden Bremskreis des Betriebsbremssystems ist. Mit "pneumatisch versorgen" ist das Bereitstellen von Druckluft, insbesondere eines ersten Drucks, gemeint, die beim Öffnen des mindestens einen Ausfallbremsventils als Ausfallbremsdruck bereitgestellt wird.

Vorzugsweise wird die Ausfallsicherheitsventileinheit pneumatisch von einem Druckvorrat versorgt, der unabhängig von dem Druckvorrat des, die Ausfallbremsung durchführenden, Bremskreises des Betriebsbremssystems ist. Insbesondere wird der Ausfallbremsdruck von einem Druckvorrat des Feststellbremssystems oder einem weiteren Druckvorrat bereitgestellt.

Vorzugsweise ist vorgesehen, dass der Diagnoseablauf während einer Betriebsbremsung des Betriebsbremssystems, insbesondere während einer vorhandenen Bremsanforderung, durchgeführt wird. Während einer Betriebsbremsung wird eine Bremsanforderung an den die Bremsung durchführenden Achsmodulator gesendet. Eine solche Bremsanforderung ist insbesondere elektrisch oder elektronisch und kann von einem Bremswertgeber oder einer Steuereinheit, beispielsweise einer externen Steuereinheit und/oder einer Automatikbetrieb-Steuereinheit, bereitgestellt werden. In diesem Fall erfolgt kann vorteilhaft das Bereitstellen des Ausfallbremsdrucks erfolgen, da ohnehin eine Druckbeaufschlagung und ein entsprechend ansteigender, über den Achsmodulator-Drucksensor gemessener Druck erwartet wird. Auch der Effekt einer Ausfallbremsung durch das Bereitstellen des Ausfallbremsdrucks würde während einer Betriebsbremsung vorteilhaft nicht oder nur im geringen Maße auffallen, da ohnehin eine angeforderte Bremsung des Fahrzeugs erfolgt.

In anderen Weiterbildungen des Verfahrens wird der Diagnoseablauf alternativ oder zusätzlich während eines Stillstands des Fahrzeugs durchgeführt, wobei insbesondere eine Bremsanforderung, insbesondere von einer externen Steuereinheit und/oder einer Automatikbetrieb-Steuereinheit generiert wird. Während eines Stillstands würde eine Betätigung der Betriebsbremse, die durch das Bereitstellen des Ausfallbremsdrucks veranlasst wird, nicht auffallen, da sich das Fahrzeug im Stillstand befindet. Jedoch wird vorteilhaft auch in diesem Fall eine Bremsanforderung generiert wird, um einen Plausibilitätsfehler in der Steuereinheit des Bremssystems zu vermeiden.

Vorzugsweise ist vorgesehen, dass
- die Bremsanforderung von einem Bremswertgeber und/oder einer externen Steuereinheit und/oder einer Automatikbetrieb-Steuereinheit bereitgestellt wird. Insbesondere wird die Bremsanforderung über einen Fahrzeug-Datenbus bereitgestellt. Insbesondere ist die Bremsanforderung in Form eines CAN-Signals, insbesondere in Form eines XBR-Signals, ausgebildet.

Bei einer Weiterbildung des Verfahrens sind die Schritte vorgesehen:
- Bereitstellen eines Signals für ein einzelnes Ventil, insbesondere für ein einzelnes Ausfallbremsventil oder ein einzelnes Bistabilventil,
- Ermitteln des Ausfallbremsdrucks, insbesondere Plausibilisieren der Druckreaktion für das einzelne Ventil. In einer Weiterbildung kann das Verfahren zusätzlich den Schritt aufweisen: Plausibilisieren der Druckreaktion für ein Druckbegrenzungsventil.

Ein Plausibilisieren umfasst ein Prüfen, ob ein ermittelter Druckwert mit einem erwarteten Druckwert übereinstimmt. Eine Druckreaktion für ein Ventil ist insbesondere die Druckänderung oder die zu erwartende Druckänderung, die mit einem Ansteuern des Ventils einhergeht. Ein Plausibilisieren kann insbesondere ein Prüfen umfassen, ob kein Druck anliegt, das heißt ob der Druck gleich oder nahe null ist, weil die Ventile bei Ansteuerung bzw. bei Bereitstellen des Signals schließen (=nicht belüften) sollen. Auf diese Weise kann die Diagnose vorteilhaft differenziert werden, weil die Reaktion einzelner Ventile geprüft werden kann. Vorteilhaft werden zunächst sämtliche Ventile im nicht angesteuerten Zustand und/oder - insbesondere im Falle eines Bistabilventils - in ihrer Belüftungsstellung belassen. In diesem Falle sollte am Drucksensor der ausgesteuerte Ausfallbremsdruck gemessen werden. Falls dies nicht der Fall ist, wird ein Fehler ausgegeben. Im Anschluss können nacheinander die einzelnen Ventile der Ausfallsicherheitsventileinheit angesteuert werden, um die Reaktion zu überprüfen. Beispielsweise wird das Ausfallbremsventil durch ein Ansteuern in seine Sperrstellung geschaltet, wodurch der gemessene Druck abfallen sollte. Ist dies nicht der Fall, kann auf einen Fehler im Zusammenhang mit dem Ausfallbremsventil geschlossen werden, der beispielsweise in der Mechanik des Ventils, in dem Magnetteil oder in der Steuerleitung liegen kann. Eine derartige, einzelne Prüfung kann in analoger Weise für die übrigen Ventile, insbesondere ein weiteres Ausfallbremsventil und/oder ein Bistabilventil, durchgeführt werden.

Ein Diagnoseablauf bzw. ein Diagnosefall kann vorteilhaft in regelmäßigen Abständen automatisch durchgeführt werden, um die Funktion der Ausfallsicherheitsventileinheit zu überprüfen und sicherzustellen und insbesondere um schlafende Fehler in der Ausfallsicherheitsventileinheit frühzeitig zu ermitteln. Beispielsweise kann ein Diagnoseablauf bei jedem Start des Fahrzeugs, oder bei einem Start des Fahrzeugs nach einer festgelegten Anzahl an Starts, erfolgen. Insbesondere kann der Diagnoseablauf im Rahmen einer übergeordneten Selbstdiagnose des Fahrzeugs durchgeführt werden. Insbesondere kann der Diagnoseablauf bei einer Betriebsbremsung nach einer festgelegten Anzahl von Betriebsbremsungen oder bei einer Betriebsbremsung in festgelegten zeitlichen Abständen (beispielsweise einmal pro Tag oder einmal pro Woche oder einmal pro Monat) durchgeführt werden.

Es soll verstanden werden, dass die Ausfallsicherheitsventileinheit gemäß dem ersten Aspekt der Erfindung, das Bremssystem gemäß dem zweiten Aspekt der Erfindung, das Fahrzeug gemäß dem dritten Aspekt der Erfindung und das Verfahren gemäß dem vierten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein.

Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine Ausfallsicherheitsventileinheit gemäß der Erfindung,
- Fig. 2: ein elektronisch steuerbares pneumatisches Bremssystem mit einer Ausfallsicherheitsventileinheit gemäß der Erfindung,
- Fig. 3: eine weitere bevorzugte Weiterbildung einer Ausfallsicherheitsventileinheit gemäß der Erfindung,
- Fig. 4: eine weitere bevorzugte Weiterbildung einer Ausfallsicherheitsventileinheit gemäß der Erfindung.

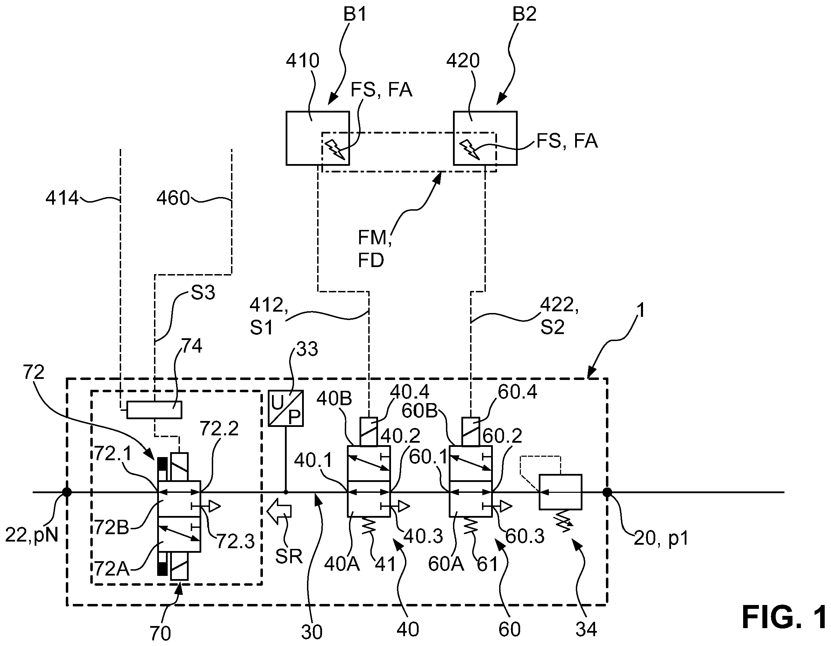

Fig. 1 zeigt eine Ausfallsicherheitsventileinheit 1 gemäß der Erfindung. Die Ausfallsicherheitsventileinheit 1 weist ein erstes monostabiles Ausfallbremsventil 40 und ein zweites monostabiles Ausfallbremsventil 60 auf.

Das erste Ausfallbremsventil 40 ist über eine erste Steuerleitung 412 signalund energieführend mit einer ersten Steuereinheit 410 verbunden. Die erste Steuereinheit 410 ist dabei einem Primärsystem B1 eines hier nicht näher dargestellten Bremssystems 204 zugeordnet. Das zweite Ausfallbremsventil 60 ist über eine zweite Steuerleitung 422 signal- und energieführend mit einer zweitem Steuereinheit 420 verbunden. Die zweite Steuereinheit 420 ist dabei einer ersten Rückfallebene B2 des hier nicht näher dargestellten Bremssystems 204 zugeordnet.

Die beiden Ausfallbremsventile 40, 60 sind pneumatisch in Reihe geschaltet in einer Ventilhauptleitung 30 der Ausfallsicherheitsventileinheit 1 angeordnet. Die Ventilhauptleitung 30 erstreckt sich dabei von einem Hauptanschluss 20 zu einem Ausfallbremsanschluss 22.

Beide Ausfallbremsventile 40, 60 sind vorliegend in einem nicht angesteuerten und stromlosen Zustand dargestellt, in dem sie sich jeweils in einer Öffnungsstellung 40A, 60A befinden. In der ersten Öffnungsstellung 40A ist eine pneumatische Verbindung zwischen einem ersten Ventilanschluss 40.1 und einem zweiten Ventilanschluss 40.2 des ersten Ausfallbremsventils 40 hergestellt. In der zweiten Öffnungsstellung 60A ist eine pneumatische Verbindung zwischen einem ersten Ventilanschluss 60.1 und einem zweiten Ventilanschluss 60.2 des zweiten Ausfallbremsventils 60 hergestellt. Wenn sich beide Ausfallbremsventil 40, 60 jeweils in der Öffnungsstellung 40A, 60A befinden, kann ein Druckluftstrom in einer Strömungsrichtung SR vom Hauptanschluss 20 zum Ausfallbremsanschluss 22 zwecks Bereitstellung eines Ausfallbremsdrucks pN strömen.

Über ein Bereitstellen eines ersten Steuersignals S1 über die erste Steuerleitung 412 kann das erste Ausfallbremsventil 40 aus der Öffnungsstellung 40A gegen den Widerstand einer ersten Rückstellfeder 41 in eine erste Sperrstellung 40B geschaltet werden. In der Sperrstellung 40B wird eine pneumatische Verbindung zwischen dem ersten Ventilanschluss 40.1 und einem Entlüftungsanschluss 40.3 hergestellt. Über ein Bereitstellen eines zweiten Steuersignals S2 über die zweite Steuerleitung 422 kann das zweite Ausfallbremsventil 60 aus der Öffnungsstellung 60A gegen den Widerstand einer zweiten Rückstellfeder 61 in eine zweite Sperrstellung 60B geschaltet werden. In der Sperrstellung 60B wird eine pneumatische Verbindung zwischen dem ersten Ventilanschluss 60.1 und einem Entlüftungsanschluss 60.3 hergestellt.

In einem normalen Betrieb des Fahrzeugs 200 ist insbesondere vorgesehen, dass sich die beiden Ausfallbremsventile 40, 60 in ihrer jeweiligen Sperrstellung 40B, 60B befinden. In diesem Zustand besteht somit keine pneumatische Verbindung zwischen dem Hauptanschluss 20 und dem Ausfallbremsanschluss 22, da die pneumatische Verbindung an mindestens zwei Stellen, nämlich an dem ersten Ausfallbremsventil 40 und an dem zweiten Ausfallbremsventil 60, unterbrochen ist.

Im Falle eines Mehrfachfehlers FM, insbesondere eines Doppelfehlers FD, d. h. wenn sowohl ein erstes Steuersignal S1 und gleichzeitig ein zweites Steuersignal S2 ausbleibt- und ein erstes Magnetteil 40.4, des ersten Ausfallbremsventils 40 sowie ein zweites Magnetteil 60.4 des zweiten Ausfallbremsventils 60 somit stromlos sind - gehen sowohl das erste Ausfallbremsventil 40 als auch das zweite Ausfallbremsventil 60 durch die von der jeweiligen Rückstellfeder 41, 61 erzeugte Rückstellkraft selbsttätig zurück in ihre Öffnungsstellung 40A, 60A.

Ein solcher Doppelfehler FD kann beispielsweise durch einen gleichzeitigen Stromausfall FS sowohl im Primärsystem B1 als auch in der ersten Rückfallebene B2 entstehen, wenn sowohl die erste Steuereinheit 410 als auch die zweite Steuereinheit 420 ohne Energieversorgung sind. In einem solchen gleichzeitigen Stromausfall kann entsprechend kein Steuersignal S1, S2 an die Ausfallbremsventile 40, 60 geleitet werden.

Des Weiteren kann sich ein Doppelfehler FD auch darin äußern, dass sowohl in der ersten Steuereinheit 410 als auch in der zweiten Steuereinheit 420 ein Ausnahmefehler FA auftritt, und von dem jeweiligen Steuergerät 410, 420 als Fehlermaßnahme (insbesondere in Ermangelung anderer Programmalternativen) ein Nullsignal geschaltet wird, und somit - zum Schalten der Ausfallbremsventile 40, 60 in die Öffnungsstellung 40A, 60A - die Steuersignale S1, S2 absichtlich auf 0 gesetzt werden. In Fig. 1 ist die Gleichzeitigkeit des Mehrfachfehlers FM bzw. des Doppelfehlers FD durch die strichpunktierte Zusammenfassung der Stromausfall- oder Ausnahmefehler FS, FA in den jeweiligen Steuereinheiten 410, 420 angedeutet. Dabei kann für das Vorliegen eines Mehrfachfehlers FM verschiedene Arten von Fehlern in den einzelnen Steuereinheiten 410, 420 vorliegen, beispielsweise bei einem Doppelfehler FD in einer Steuereinheit 410, 420 ein Stromausfall FA, und in der jeweils anderen Steuereinheit 410, 420 ein Ausnahmefehler FA vorliegen.

Die Ausfallsicherheitsventileinheit 1 weist weiterhin ein Druckbegrenzungsventil 34 auf, welches vorliegend in der Ventilhauptleitung 30 zwischen dem Hauptanschluss 20 und dem zweiten Ausfallbremsventil 60 angeordnet ist derart, dass ein am Hauptanschluss 20 anliegender erster Druck p1 auf einen festen, am Druckbegrenzungsventil 34 manuell eingestellten Wert begrenzt wird, bevor er am Ausfallbremsanschluss 22 als Ausfallbremsdruck pN bereitgestellt wird. Der am Druckbegrenzungsventil 34 manuell eingestellte Wert wird in der Regel einmalig eingestellt, bzw. befindet sich in einem voreingestellten Auslieferungszustand und wird in diesem Fall im Betrieb des Bremssystems nicht mehr geändert.

Die Ausfallsicherheitsventileinheit 1 weist weiterhin eine Bistabilventileinheit 70 mit einem Bistabilventil 72 auf, welches in der Ventilhauptleitung 30 angeordnet ist. Das Bistabilventil 72 ist vorliegend in einer zweiten Stellung 72B dargestellt, in der eine pneumatische Verbindung zwischen einem ersten Bistabilventilanschluss 72.1 und einem zweiten Bistabilventilanschluss 72.2 hergestellt ist. In einer ersten Stellung 72A des Bistabilventils 72 ist der zweite Bistabileventilanschluss 72.2 gesperrt, und es ist eine pneumatische Verbindung zwischen dem ersten Bistabilventilanschluss 72.1 und einer Entlüftung 72.3 hergestellt. Über eine Ventil-Steuereinheit 74 kann das Bistabilventil 72 angesteuert werden. Die Ventil-Steuereinheit 74 ist zum Empfangen eines dritten Steuersignals S3 mit einer ersten Fahrzeugbus-Leitung 460 verbunden, sowie zwecks Energieversorgung mit einer ersten Versorgungsleitung 414. Die Ventil-Steuereinheit 74 muss dabei nicht zwingend in der Bistabilventileinheit 70 angeordnet sein, sondern kann beispielsweise auch in einem anderen Ort innerhalb des Bremssystems angeordnet sein.

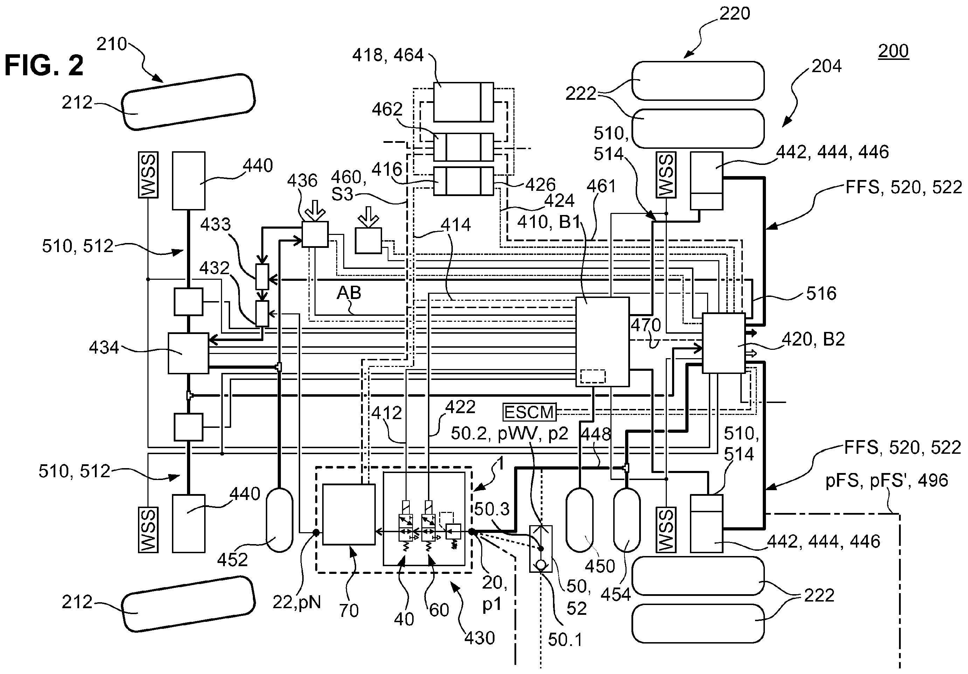

Die Ausfallsicherheitsventileinheit 1 weist weiter einen Drucksensor 33 auf, insbesondere zur Plausibilisierung der Funktion der Ausfallbremsventile 40, 60. Fig. 2 zeigt ein elektronisch steuerbares pneumatisches Bremssystem 204 mit einer Ausfallsicherheitsventileinheit 1 gemäß der Erfindung. Das elektronisch steuerbare pneumatische Bremssystem 204 ist vorliegend in einem als Nutzfahrzeug 202 ausgebildeten Fahrzeug 200 eingesetzt, welches hier stark schematisch dargestellt ist, insbesondere mit zwei Vorderrädern 212 einer Vorderachse 210 und vier Hinterrädern 222 einer Hinterachse 220.

Ein Primärsystem B1 des elektronisch steuerbaren pneumatischen Bremssystems 204 wird über eine erste Steuereinheit 410 gesteuert. Eine erste Rückfallebene B2 des elektronisch steuerbaren pneumatischen Bremssystems 204 wird über eine zweite Steuereinheit 420 gesteuert. Die erste Steuereinheit 410 ist über eine erste Versorgungsleitung 414 mit einer ersten Energieversorgung 416 energieführend verbunden. Die zweite Steuereinheit 420 ist über eine zweite Versorgungsleitung 424 mit einer zweiten Energieversorgung 426 energieführend verbunden.

Die erste Steuereinheit 410 ist ausgebildet, über elektronische Ansteuerung eines elektronisch angesteuerten Bremswertgebers 436 und/oder eines Vorderachsmodulators 434 einen pneumatischen Vorderachskreis 512 eines Betriebsbremssystems 510 des elektronisch steuerbaren pneumatischen Bremssystems 204 mit Druckluft aus einem weiteren Druckluftvorrat 452 zu versorgen, um mindestens einen, einem Vorderrad 212 zugeordneten Betriebsbremszylinder 440 zu aktuieren. Die erste Steuereinheit 410 ist weiter ausgebildet, jeweils eine Betriebsbremskammer 444 mindestens eines, einem Hinterrad 222 zugeordneten Feststellbremszylinders 442 über einen pneumatischen Hinterachskreis 514 über ein pneumatisches Ansteuern zu aktuieren. Die Druckluft für den pneumatischen Hinterachskreis 514 wird dabei von einem noch weiteren Druckluftvorrat 450 bereitgestellt. Die erste Steuereinheit 410 ist somit ausgebildet, sowohl die Vorderräder 212 als auch die Hinterräder 222 des Fahrzeugs 204 zu bremsen.

Die zweite Steuereinheit 420 ist ausgebildet, eine Feststellbremskammer 446 einer des jeweils dem Hinterrad 222 zugeordneten Feststellbremszylinders 442 über einen pneumatischen Hinterachskreis 522 eines Feststellbremssystems 520 über ein pneumatisches Ansteuern zu aktuieren. Die Druckluft für das Feststellbremssystem 520 wird dabei von einem Druckluftspeicher 454 bereitgestellt. Die zweite Steuereinheit 420 ist weiter ausgebildet, über einen Redundanzkreis 516 des Betriebsbremssystems 510 und ein weiteres Vorderachs-Wechselventil 433 den Vorderachsmodulator 434 - und darüber den pneumatischen Vorderachskreis 512 des Betriebsbremssystems 510 mit den Betriebsbremszylindern 440 pneumatisch anzusteuern. Somit ist die zweite Steuereinheit 420 ausgebildet, neben den Hinterrädern 222 zusätzlich die Vorderräder 212 des Fahrzeugs 204 zu bremsen, wodurch sie insbesondere geeignet ist, als Steuereinheit für die erste Rückfallebene B2 zu dienen.

Die erste Steuereinheit 410 und die zweite Steuereinheit 420 sind über eine Steuerverbindung 470 miteinander bidirektional signalführend verbunden.

Der Druckluftspeicher 454 ist über eine Vorratsleitung 448 mit dem Hauptanschluss 20 der Ausfallsicherheitsventileinheit 1 verbunden. Das erste Ausfallbremsventil 40 ist über die erste Steuerleitung 412 mit der ersten Steuereinheit 410 signal- und energieführend verbunden. Das zweite Ausfallbremsventil 60 ist über die zweite Steuerleitung 422 mit der zweiten Steuereinheit 420 signal- und energieführend verbunden.

Die Ausfallsicherheitsventileinheit 1 weist weiter die Bistabilventileinheit 70 auf, welche mittels der ersten Versorgungsleitung 414 mit Energie versorgt wird und mittels einer Fahrzeugbus-Leitung 460 mit einem ersten Fahrzeugbus 462 verbunden ist. Der erste Fahrzeugbus 462 ist über die Fahrzeugbus-Leitung 460 weiter mit der ersten Steuereinheit 410 verbunden. Der erste Fahrzeugbus 462 ist vorliegend mit einer weiteren Fahrzeugbus-Leitung 461 mit der zweiten Steuereinheit 420 verbunden.

Die Bistabilventileinheit 70 mit einem hier nicht gezeigten Bistabilventil 72 hat die Eigenschaft, dass es von einem Fehlerfall, insbesondere im Fall eines Doppelfehlers FD, nicht direkt beeinflusst wird, weil es aufgrund seiner bistabilen Eigenschaft in einer vorher geschalteten Stellung verharrt.

Im Unterschied dazu haben das erste Ausfallbremsventil 40 und das zweite Ausfallbremsventil 60 aufgrund ihres monostabiles Verhaltens die Eigenschaft, in einem stromlosen Zustand in eine Stellung, vorliegend jeweils die Öffnungsstellung 40A, 60A, zurückzufallen. Auf diese Weise kann gemäß der Erfindung in einem Fall, in dem sowohl am ersten Ausfallbremsventil 40 als auch am zweiten Ausfallbremsventil 60 kein Steuersignal S1, S2 oder das Steuersignal S1, S2 als ein Nullsignal anliegt, ein selbsttätiges Schalten der Ausfallbremsventile 40, 60 in ihre Öffnungsstellung 40A, 60A erreicht werden. Ein solcher Fall eines ausbleibenden Steuersignals S1, S2 oder Nullsignals tritt insbesondere bei einem Ausnahmefehler FA oder Stromausfall FS in den Steuereinheiten 410, 420 auf.

Wenn sich das Bistabilventil 72 in seiner zweiten Stellung 72B befindet, ist dies insbesondere geeignet für einen automatischen, insbesondere autonomen Fahrbetrieb des Fahrzeugs 200, weil in diesem Fall eine pneumatische Verbindung zwischen dem ersten und zweiten Bistabilventilanschluss 72.1, 72.2 hergestellt ist und auf diese Weise - im Falle eines stromlosen Zurückfallens der Ausfallbremsventile 40, 60 in ihre Öffnungsstellung 40A, 60A - ein Ausfallbremsdruck pN am Ausfallbremsanschluss 22 zwecks Bremsung des Fahrzeugs 200 bereitgestellt wird. In einem automatischen, insbesondere autonomen Fahrbetrieb kann das Fahrzeug 200 durch eine Automatikbetrieb-Steuereinheit 464 gesteuert werden, die mit dem ersten Fahrzeugbus 462 signalleitend verbunden ist. Insbesondere kann eine externe Steuereinheit 418 die Automatikbetrieb-Steuereinheit 464 umfassen oder als eine solche ausgebildet sein.

Wenn sich das Bistabilventil 72 in seiner ersten Stellung 72A befindet, ist dies insbesondere geeignet für einen manuellen Fahrbetrieb des Fahrzeugs 200. In diesem Fall wird durch ein Sperren der Ventilhauptleitung 30 verhindert, dass im Falle eines Doppelfehlers FD eine Bremsung durch Bereitstellen eines Ausfallbremsdrucks pN am Ausfallbremsanschluss 22 durchgeführt wird.

Bei Bereitstellen eines Ausfallbremsdrucks pN am Ausfallbremsanschluss 22 gelangt der Ausfallbremsdrucks pN über ein Vorderachs-Wechselventil 432 und einen Vorderachsmodulator 434 an zwei, jeweils einem Vorderrad 212 zugeordneten Betriebsbremszylinder 440. Die Betriebsbremszylinder 440 werden durch Beaufschlagung mit dem Ausfallbremsdrucks pN aktuiert, wodurch eine Bremsung der Vorderräder 212 erreicht wird. Die Ausfallsicherheitsventileinheit 1 ist somit in einem separaten Ansteuerzweig 430 des elektronisch steuerbaren pneumatischen Bremssystems 204 angeordnet, der unabhängig zu der regulären Aktuierung der Betriebsbremszylinder 440, insbesondere über einen Bremswertgeber 436 bereitgestellt wird. Generell ist auch eine Bereitstellung eines Ausfallbremsdrucks pN für einen anderen Bremszylinder, beispielsweise an die Betriebsbremskammer 444 der den Hinterrädern 222 zugeordneten Feststellbremszylinder 442, denkbar. Insbesondere ist der Druckluftspeicher 454 separat von einem weiteren Druckluftvorrat 452, der im Normalbetrieb Druckluft für die Betriebsbremszylinder 440 vorhält, um die Unabhängigkeit der Ausfallsicherheitsventileinheit 1 zu erhöhen, und auf diese Weise vorteilhaft eine redundante Ausfallbrems-Funktionalität bereitzustellen.

In vorteilhaften Ausführungsformen ist der Hauptanschluss 20 pneumatisch mit dem Feststellbremssystem 520 verbunden. In derartigen Ausführungsformen ist der Hauptanschluss insbesondere nicht mit der Vorratsleitung 448 verbunden. Insbesondere ist der Hauptanschluss 20 - wie hier strichpunktiert dargestellt - pneumatisch über eine pneumatische Feststellbremsleitung 496 des Feststellbremssystems 520 verbunden zum Empfangen eines Feststell-Bremsdrucks pFS. Alternativ oder zusätzlich kann der Hauptanschluss 20 ausgebildet sein zum Empfangen eines von dem Feststell-Bremsdruck pFS abgeleiteten Drucks pFS'.

In weiteren vorteilhaften Ausführungsformen kann die Ausfallsicherheitsventileinheit 1 ein Auswahlventil 50 aufweisen, das insbesondere als ein Wechselventil 52 ausgebildet ist. Das Auswahlventil 50 ist ausgebildet, denjenigen Anschluss von einem ersten Auswahlventilanschluss 50.1 und einem zweiten Auswahlventilanschluss 50.2 mit einem dritten Auswahlventilanschluss 50.3 pneumatisch zu verbinden, an dem der höhere Druck anliegt.

Insbesondere kann in Ausführungsformen mit einem Auswahlventil 50 am zweiten Ventilanschluss 50.2 ein weiterer Vorratsdruck pWV von einer weiteren Druckluftquelle, insbesondere dem Druckluftspeicher 454, einem weiteren Druckluftvorrat 452 oder einem noch weiteren Druckluftvorrat 450, als zweiter Druck p2 bereitgestellt werden. Vorliegend ist beispielhaft punktiert eine pneumatische Verbindung zwischen dem zweiten Auswahlventilanschluss 50.2 und dem Druckluftspeicher 454 dargestellt. Über das Auswahlventil 50 kann vorteilhaft sichergestellt werden, dass der am Hauptanschluss 20 anliegende entweder der Feststell-Bremsdruck pFS als erster Druck p1 oder der weitere Vorratsdruck pWV als zweiter Druck p2 ist, je nachdem, an welchem Auswahlventilanschluss 50.1, 50.2 der höhere Druck anliegt. Hierdurch wird vorteilhaft eine Redundanz erreicht, falls an einem der beiden Auswahlventilanschluss, beispielsweise aufgrund einer Leckage oder eines Systemausfalls keine Druckluft zur Verfügung stehen sollte.

Ein Diagnoseablauf AD zum Prüfen der Funktionsweise der Ausfallsicherheitsventileinheit 1 kann vorteilhaft in einem Diagnosefall FT von einer elektronischen Steuereinheit, insbesondere der Steuereinheit 410 oder einer externen Steuereinheit 418, insbesondere einer Automatikbetrieb-Steuereinheit 464, durchgeführt werden.

Die externe Steuereinheit 418 ist insbesondere zur Überwachung der Steuereinheiten 410, 420 mit diesen signalführend verbunden, insbesondere über eine Fahrzeugbus-Leitung 460, 461. Die externe Steuereinheit 418 kann insbesondere vorteilhaft durch eine andere elektronische Steuereinheit des Fahrzeugs oder als Teil einer solchen anderen elektronischen Steuereinheit gebildet sein. Eine solche andere elektronische Steuereinheit, insbesondere die externe Steuereinheit 418, kann insbesondere eine Automatikbetrieb-Steuereinheit 464, oder eine elektronische Steuereinheit eines Lenksystems, oder eine elektronische Steuereinheit eines Feststellbremssystems, oder eine elektronische Steuereinheit einer Luftaufbereitungsanlage sein. Eine Automatikbetrieb-Steuereinheit 464 kann insbesondere ein sogenannter virtueller Fahrer sein, der auf Basis von Sensordaten, Betriebsdaten, Routendaten, Solldaten und dergleichen Daten Fahrbefehle generiert und diese dem Fahrzeug bereitstellt. Fahrbefehle können Lenkbefehle, Beschleunigungsbefehle und Bremsbefehle, insbesondere eine Bremsanforderung AB, umfassen.

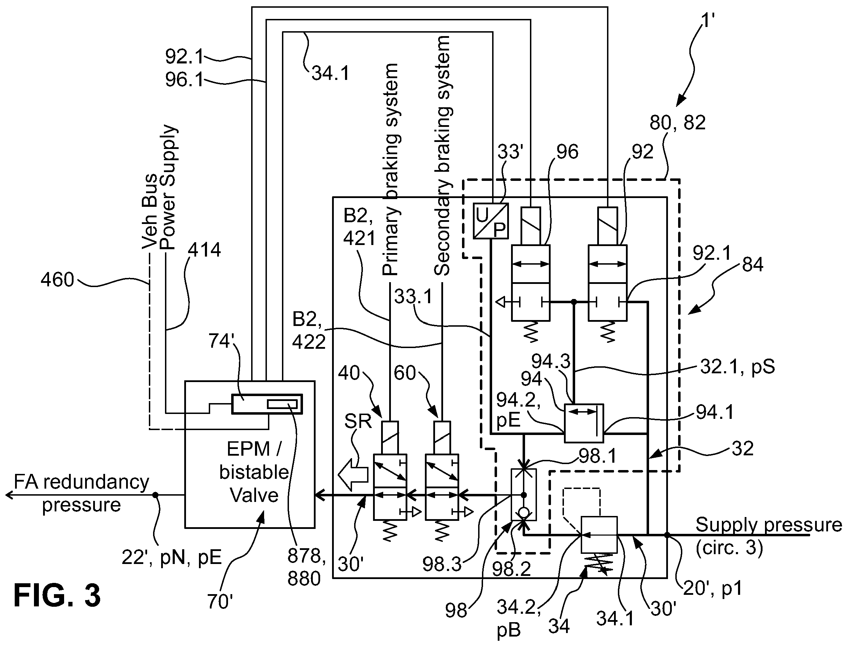

Fig. 3 zeigt eine weitere Weiterbildung einer Ausfallsicherheitsventileinheit 1', die weiter eine Ausfalldruck-Einstelleinrichtung 80 aufweist, die vorliegend als pneumatische Einstelleinrichtung 82 ausgebildet ist. Die Ausfallbremsdruck-Einstelleinrichtung 80 weist ein Steuerventil 92 und ein Relaisventil 94 auf, die zusammen zu einer Relaisventilanordnung 84 gehören. Über einen Pilotzweig 32 wird der am Hauptanschluss 20' anliegende erste Druck p1 zum einen an einem ersten Steuerventilanschluss 92.1, zum anderen an einem ersten Relaisventilanschluss 94.1 bereitgestellt.

Indem über ein Öffnen und Schließen sowohl des Steuerventils 92, als auch über ein Halteventil 96 ein Steuerdruck pS in einer Steuerleitung 32.1 eingestellt wird, kann am zweiten Relaisventilanschluss 94.2 ein Einstelldruck pE eingestellt werden.

Durch ein Öffnen des Steuerventils 92 kann der Steuerdruck pS durch Füllen der Steuerleitung 32.1 mit am Hauptanschluss 20 bereitgestellter Druckluft erhöht werden, bis maximal auf den Wert des ersten Drucks p1. Entsprechend der Funktionsweise eines Relaisventils wird der als Steuerdruck pS an einem Steueranschluss 94.3 anliegende Druck als Einstelldruck pE am zweiten Relaisventilanschluss 94.2 ausgesteuert. Durch Messen dieses ausgesteuerten Einstelldrucks pE durch einen Drucksensor 33' kann regelnd, das heißt im Sinne eines Regelkreises, ein gewünschter Einstelldruck pE durch ein Öffnen bzw. Schließen des Steuerventils 92 und des Halteventils 96 am Steueranschluss 94.3 eingestellt werden. Hierbei kann zum Erhöhen des Steuerdrucks pS - und somit des Einstelldrucks pE - das Steuerventil 92 geöffnet werden, während das Halteventil 96 geschlossen bleibt. Zum Senken des Steuerdrucks pS - und somit des Einstelldrucks pE - kann entsprechend bei geschlossenem Steuerventil 92 das Halteventil 96 geöffnet werden, um kontrolliert Druckluft aus der Steuerleitung 32.1 abzulassen, bis ein gewünschter Einstelldruck pE am zweiten Relaisventilanschluss 94.2 anliegt. Bei Erreichen des gewünschten Einstelldrucks pE kann das Halteventil 96 geschlossen werden. Durch die gezeigte Anordnung des Steuerventils 92 und des Halteventils 96 kann vorteilhaft ein gewünschter Steuerdruck pS in der Steuerleitung 32.1 eingesperrt und somit am Steueranschluss 94.3 gehalten werden, um einen entsprechend ausgesteuerten Einstelldruck pE dauerhaft am zweiten Relaisventilanschluss 94.2 vorzuhalten.

In der vorliegend gezeigten Weiterbildung übernimmt eine Ventil-Steuereinheit 74' die vorstehend beschriebene Einstellung des Steuerdrucks pS. Hierzu ist der Drucksensor 33' über eine Drucksensor-Messleitung 33.1 mit der Ventil-Steuereinheit 74' verbunden. Das Halteventil 96 ist über eine Halteventil-Steuerleitung 96.1 mit der Ventil-Steuereinheit 74' verbunden. Das Steuerventil 92 ist mittels einer Steuerventil-Steuerleitung 92.1 mit der Ventil-Steuereinheit 74' verbunden. Auf diese Weise kann die Ventil-Steuereinheit 74' auf Basis eines mit dem Drucksensor 33' gemessenen Drucks das Steuerventil 92 und das Halteventil 96 entsprechend geöffnet und geschlossen werden, bis ein gewünschter Einstelldruck pE am Drucksensor 33' und somit auch näherungsweise am zweiten Relaisventilanschluss 94.2 anliegt.

In Weiterbildungen mit einer Ausfallbremsdruck-Einstelleinrichtung 80 kann die Ventil-Steuereinheit 74', 74" vorteilhaft eine Betriebsprofil-Speichereinheit 878 aufweisen, in dem mindestens ein Betriebsprofil 880 hinterlegt werden kann. In einem Betriebsprofil 880 können in Abhängigkeit von Betriebsbedingungen eines konkreten Fahrzeugs Sollwerte für einen einzustellenden Einstelldruck pE hinterlegt werden, der im Fall einer Ausfallbremsung als Ausfallbremsdruck pN bereitgestellt wird. Durch Auswahl eines Betriebsprofils 880, insbesondere durch den Fahrer des Fahrzeugs 200, kann vorteilhaft für tatsächliche oder zu erwartende Betriebsbedingungen eines konkreten Fahrzeugs durch Einstellen des Einstelldrucks ein geeigneter Bremsdruck eingestellt werden, insbesondere um das Fahrzeug 200 im Fall einer Ausfallbremsung kontrolliert und ohne Blockieren sicher zu verzögern.

Die Ventil-Steuereinheit 74' ist weiterhin - analog zu der in Fig. 1 gezeigten Weiterbildung - über eine Fahrzeugbus-Leitung 460 mit einem Fahrzeugbus 462, insbesondere einem CAN-Bus, verbunden, und über eine erste Versorgungsleitung 414 mit einer hier nicht gezeigten ersten Energieversorgung 416 verbunden.

Die Ausfallsicherheitsventileinheit 1' weist weiterhin ein Wechselventil 98 auf, welches die Ventilhauptleitung 30 und den Pilotzweig 32 zusammenführt. Hierzu verbindet ein Teil des Pilotzweigs 32 den zweiten Relaisventilanschluss 94.2 mit einem ersten Wechselventilanschluss 98.1. Weiterhin verbindet die Ventilhauptleitung 30' den Hauptanschluss 20' mit einem zweiten Wechselventilanschluss 98.2. Vorliegend ist in der Ventilhauptleitung 30' zwischen dem Hauptanschluss 20' und dem zweiten Wechselventilanschluss 98.2 ein Druckbegrenzungsventil 34 angeordnet, welches einstellbar den am Hauptanschluss 20' und somit an einem ersten Druckbegrenzer-Ventilanschluss 34.1 bereitgestellten ersten Druck p1 auf einen einstellbaren Begrenzungsdruck pB an einem zweiten Druckbegrenzer-Ventilanschluss 34.2 bereitstellt.

Das Wechselventil 98 ist derart ausgebildet, dass an demjenigen der beiden Wechselventilanschlüsse 98.1, 98.2, an dem der höhere Druck herrscht, eine pneumatische Verbindung zu einem dritten Wechselventilanschluss 98 3 hergestellt wird.

Mit dem dritten Wechselventilanschluss 98.3 ist die Ventilhauptleitung 30' verbunden. Die Ventilhauptleitung 30' verbindet auf diesem Abschnitt - in Strömungsrichtung SR abwärts vom Wechselventil 98 - den dritten Wechselventilanschluss 98.3 mit dem Ausfallbremsanschluss 22', wobei auf der Ventilhauptleitung 30' weiterhin das erste und zweite Ausfallbremsventil 40, 60 und weiterhin eine Bistabilventileinheit 70' angeordnet sind. Die Bistabilventileinheit 70' vorliegend stark vereinfacht dargestellt, insbesondere ist ein Bistabilventil nicht dargestellt.

In einer derartigen Weiterbildung kann vorteilhaft einen Einstelldruck pE über die Ausfallbremsdruck-Einstelleinrichtung 80 eingestellt werden, der im Falle einer Ausfallbremsung bei einem Mehrfachfehler FM, insbesondere bei einem Doppelfehler FD, diesen Einstelldruck PE als Ausfallbremsdruck pN am Ausfallbremsanschluss 22' bereitstellt. Durch das Wechselventil 98 wird weiterhin sichergestellt, dass von dem am ersten Wechselventilanschluss 98.1 anliegenden Einstelldruck pE und dem am zweiten Wechselventilanschluss 98.2 anliegenden Begrenzungsdruck pB stets der höhere Druck von beiden am dritten Wechselventilanschluss 98.3 und somit - im Falle eines Mehrfachfehlers FM - am Ausfallbremsanschluss 22' bereitgestellt wird.

Durch das Wechselventil 98 kann somit beispielsweise mittels des Druckbegrenzungsventils 34 am zweiten Wechselventilanschluss 98.2 ein - in jedem Ausfall-Bremsfall bereitzustellender - Mindestwert als Begrenzungsdruck pB bereitgestellt werden, wobei - wenn beispielsweise aus einem Betriebsprofil eines konkreten Fahrzeuges hervorgeht, dass ein höherer Ausfallbremsdruck pN erforderlich oder wünschenswert wäre - dieser höhere Wert über die Ausfallbremsdruck-Einstelleinrichtung 80 eingestellt werden kann und als Einstelldruck pE am ersten Wechselventilanschluss 98.1 bereitgestellt werden kann. Durch die Funktionsweise des Wechselventils 98 in der hier gezeigten "Select-High"-Ausführung kann somit der zweite Wechselventilanschluss 98.2 durch einen am ersten Wechselventilanschluss 98.1 anliegenden, höheren Druck übersteuert werden.

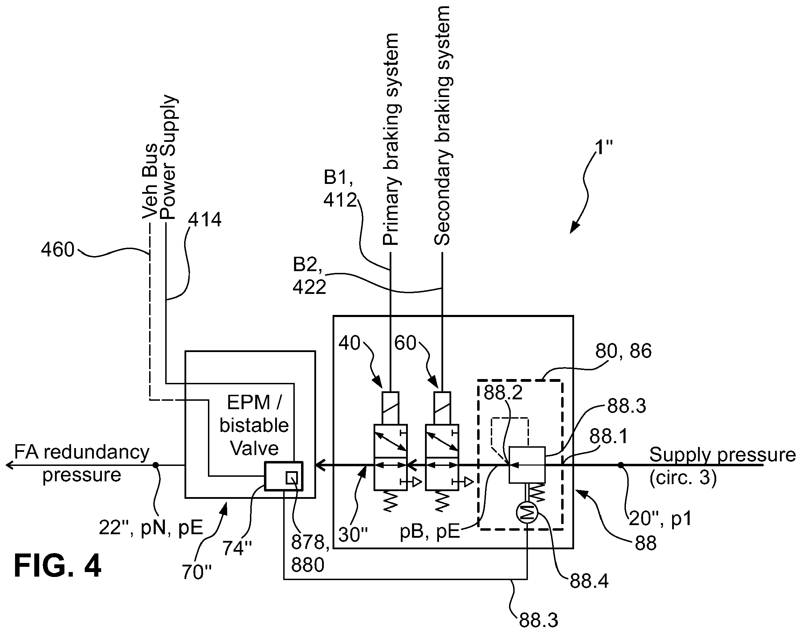

In Fig. 4 ist eine weitere Weiterbildung einer Ausfallsicherheitsventileinheit 1" gezeigt mit einer Ausfallbremsdruck-Einstelleinrichtung 80, welche vorliegend als elektrische Einstelleinrichtung 86 ausgebildet ist. Die Ausfallbremsdruck-Einstelleinrichtung 80 weist in diesem Fall eine Motorventilanordnung 88 auf.

Diese ist im Wesentlichen als ein Druckbegrenzungsventil 88.3 ausgebildet, bei dem ein an einem ersten Motorventilanordnungs-Anschluss 88.1 bereitgestellter erster Druck p1 auf einen Begrenzungsdruck pB reduziert werden und an einem zweiten Motorventilanordnungs-Anschluss 88.2 bereitgestellt werden kann. Der am zweiten Motorventilanordnungs-Anschluss 88.2 bereitgestellte Begrenzungsdruck pB ist mittels eines Motors 88.4 nach Bedarf, insbesondere auf Basis eines Betriebsprofils 880 eines konkreten Fahrzeugs, einstellbar. Somit kann der an einem Hauptanschluss 20" und somit über eine Ventilhauptleitung 30" am ersten Motorventilanordnung-Anschluss 88.1 bereitgestellte erste Druck p1 mittels der Motorventilanordnung 88 auf den einstellbaren Begrenzungsdruck pB eingestellt werden, der in diesem Fall gleichzeitig der Einstelldruck pE ist. Dieser Einstelldruck pE wird dann über die Ventilhauptleitung 30" im Ausfall-Bremsfall, d. h. wenn sich beide Ausfallbremsventile 40, 60 in ihrer Öffnungsstellung befinden, am Ausfallbremsanschluss 22" bereitgestellt.

Vorliegend wird die Motorventilanordnung 88 über eine Ventil-Steuereinheit 74" gesteuert. Die Ventil-Steuereinheit 74" ist über eine Motorventil-Steuerleitung 88.3 mit der Motorventilanordnung 88 verbunden. Die Bistabilventileinheit 70" ist vorliegend stark vereinfacht dargestellt, insbesondere ist ein Bistabilventil nicht dargestellt. Indem - analog zur den in Fig. 1 und 3 gezeigten Ausführungsformen - in dieser Ausführungsform ein hier nicht dargestellter Drucksensor vorgesehen wird, kann der Einstelldruck pE in der Ventilhauptleitung 30" gemessen werden und durch Ansteuerung der Motorventilanordnung 88 entsprechend regelnd auf einen Sollwert eingestellt werden.

### Bezugszeichenliste (Teil der Beschreibung)

- 1, 1', 1": Ausfallsicherheitsventileinheit
- 20, 20', 20": Hauptanschluss
- 22, 22', 22": Ausfallbremsanschluss
- 30, 30', 30": Ventilhauptleitung
- 32: Pilotzweig
- 32.1: Steuerleitung
- 33: Drucksensor
- 33.1: Drucksensor-Messleitung
- 34: Druckbegrenzungsventil
- 34.1: erster Druckbegrenzer-Ventilanschluss
- 34.2: zweiter Druckbegrenzer-Ventilanschluss
- 40: erstes monostabiles Ausfallbremsventil
- 40.1: erster Ventilanschluss des ersten Ausfallbremsventils
- 40.2: zweiter Ventilanschluss des ersten Ausfallbremsventils
- 40.3: Entlüftungsanschluss des ersten Ausfallbremsventils
- 40.4: erstes Magnetteil, Magnetteil des ersten Ausfallbremsventils
- 40A: Öffnungsstellung des ersten Ausfallbremsventils, erste Öffnungsstellung
- 40B: Sperrstellung des ersten Ausfallbremsventils, erste Sperrstellung
- 41: Erste Rückstellfeder, Rückstellfeder des ersten Ausfallbremsventils
- 50: Auswahlventil
- 52: Wechselventil
- 60: zweites monostabiles Ausfallbremsventil
- 60.1: erster Ventilanschluss des zweiten Ausfallbremsventils
- 60.2: zweiter Ventilanschluss des zweiten Ausfallbremsventils
- 60.3: Entlüftungsanschluss des zweiten Ausfallbremsventils
- 60.4: zweites Magnetteil, Magnetteil des zweiten Ausfallbremsventils
- 60A: Öffnungsstellung des zweiten Ausfallbremsventils, zweite Öffnungsstellung
- 60B: Sperrstellung des ersten Ausfallbremsventils, erste Sperrstellung
- 61: zweite Rückstellfeder, Rückstellfeder des zweiten Ausfallbremsventils
- 70: Bistabilventileinheit
- 72: Bistabilventil
- 72.1: erster Bistabilventilanschluss
- 72.2: zweiter Bistabilventilanschluss
- 72.3: Entlüftung des Bistabilventils
- 72A: Erste Stellung des Bistabilventils
- 72B: Zweite Stellung des Bistabilventils
- 74, 74', 74": Ventil-Steuereinheit
- 80: Ausfalldruck-Einstelleinrichtung
- 82: pneumatische Einstelleinrichtung
- 84: Relaisventilanordnung
- 86: elektrische Einstelleinrichtung
- 88: Motorventilanordnung
- 88.1: erster Motorventilanordnungs-Anschluss
- 88.2: zweiter Motorventilanordnungs-Anschluss
- 88.3: Druckbegrenzungsventil der Motorventilanordnung
- 88.4: Motor der Motorventilanordnung
- 92: Steuerventil
- 92.1: erster Steuerventilanschluss
- 94: Relaisventil
- 94.1: erster Relaisventilanschluss
- 94.2: zweiter Relaisventilanschluss
- 94.3: Steueranschluss
- 96: Halteventil
- 98: Wechselventil
- 98.1: erster Wechselventilanschluss
- 98.2: zweiter Wechselventilanschluss
- 98.3: dritter Wechselventilanschluss
- 200: Fahrzeug
- 202: Nutzfahrzeug
- 204: Bremssystem, elektronisch steuerbares pneumatisches Bremssystem
- 210: Vorderachse
- 212: Vorderrad
- 220: Hinterachse
- 222: Hinterrad
- 410: erste Steuereinheit
- 412: erste Steuerleitung
- 414: erste Versorgungsleitung
- 416: erste Energieversorgung
- 418: externe Steuereinheit
- 420: zweite Steuereinheit
- 422: zweite Steuerleitung
- 424: zweite Versorgungsleitung
- 426: zweite Energieversorgung
- 430: separater Ansteuerzweig
- 432: Vorderachs-Wechselventil
- 433: weiteres Vorderachs-Wechselventil
- 434: Vorderachsmodulator
- 436: Bremswertgeber
- 440: Betriebsbremszylinder
- 442: Feststellbremszylinder
- 444: Betriebsbremskammer des Feststellbremszylinders
- 446: Feststellbremskammer des Feststellbremszylinders
- 448: Vorratsleitung
- 450: noch weiterer Druckluftvorrat
- 452: weiterer Druckluftvorrat
- 454: Druckluftspeicher
- 460: Fahrzeugbus-Leitung
- 461: weitere Fahrzeugbus-Leitung
- 462: erster Fahrzeugbus
- 464: Automatikbetrieb-Steuereinheit
- 470: Steuerverbindung
- 496: pneumatische Feststellbremsleitung
- 510: Betriebsbremssystem
- 512: pneumatischer Vorderachskreis des Betriebsbremssystems
- 514: pneumatischer Hinterachskreis des Betriebsbremssystems
- 516: Redundanzkreis des Betriebsbremssystems
- 520: Feststellbremssystem
- 522: pneumatischer Hinterachskreis des Feststellbremssystems
- 878: Betriebsprofil-Speichereinheit
- 880: Betriebsprofil

- AB: Bremsanforderung
- AD: Diagnoseablauf
- B1: Primärsystem
- B2: ersten Rückfallebene
- BA: Ausfallbremsung
- FA: Ausnahmefehler
- FD: Doppelfehler
- FFS: Feststellbremsfunktion
- FM: Mehrfachfehler
- FS: Stromausfall
- FT: Diagnosefall

- p1: erster Druck
- p2: zweiter Druck
- pB: Begrenzungsdruck
- pE: Einstelldruck
- pFS: Feststell-Bremsdruck
- pFS': vom Feststell-Bremsdruck abgeleiteter Druck
- pN: Ausfallbremsdruck
- pS: Steuerdruck
- pWV: weiterer Vorratsdruck

- S1: Erstes Steuersignal
- S2: Zweites Steuersignal
- S3: Drittes Steuersignal
- SR: Strömungsrichtung

## Patentansprüche

1. Ausfallsicherheitsventileinheit (1) für eine Ausfallbremsfunktion (FN) eines elektronisch steuerbaren pneumatischen Bremssystems (204) für ein Fahrzeug (200), insbesondere ein Nutzfahrzeug (202), wobei das Bremssystem (204) eine erste Steuereinheit (410) und eine zweite Steuereinheit (420) aufweist, die unabhängig voneinander mit Energie versorgt werden und/oder sich wenigstens teilweise gegenseitig in ihrer Funktion ersetzen können,
**dadurch gekennzeichnet, dass** die Ausfallsicherheitsventileinheit (1) aufweist:
- ein als monostabiles Ventil ausgebildetes erstes Ausfallbremsventil (40) und ein als monostabiles Ventil ausgebildetes zweites Ausfallbremsventil (60), und
- eine Ventilhauptleitung (30), die einen, einen ersten Druck (p1) bereitstellenden, Hauptanschluss (20) und einen Ausfallbremsanschluss (22) pneumatisch verbindet,
- wobei das erste Ausfallbremsventil (40) und das zweite Ausfallbremsventil (60) in der Ventilhauptleitung (30) pneumatisch in Reihe geschaltet sind, und
- wobei das erste Ausfallbremsventil (40) von der ersten Steuereinheit (410) steuerbar ist und das zweite Ausfallbremsventil (60) von der zweiten Steuereinheit (420) steuerbar ist, und
- wobei die Ausfallbremsventile (40, 60) im nicht angesteuerten, insbesondere stromlosen, Zustand in einer Öffnungsstellung (40A, 60A) geöffnet sind derart, dass der am Hauptanschluss (20) anliegende erste Druck (p1) als Ausfallbremsdruck (pN) am Ausfallbremsanschluss (22) bereitgestellt wird derart, dass
- in einem Fehlerfall (FF) und/oder Stromausfall (SF) und/oder Diagnosefall (FT) der Steuereinheiten (410, 420) über das Bereitstellen des Ausfallbremsdrucks (pN) am Ausfallbremsanschluss (22) durch das Bremssystem (204) eine Ausfallbremsung (BA) des Fahrzeugs (200) ausgelöst wird;
wobei das erste Ausfallbremsventil (40) und das zweite Ausfallbremsventil (60) als 3/2-Wege-Magnetventile ausgebildet sind.

2. Ausfallsicherheitsventileinheit (1) nach Anspruch 1, weiter aufweisend ein in der Ventilhauptleitung (30) angeordnetes Bistabilventil (72), ausgebildet zum Umschalten zwischen einer ersten, die Ventilhauptleitung (30) sperrenden oder mit einer Entlüftung (72.3) verbindenden Stellung (72A) und einer zweiten, die Ventilhauptleitung (30) verbindenden Stellung (72B).

3. Ausfallsicherheitsventileinheit (1) nach einem der vorherigen Ansprüche, weiter aufweisend einen Drucksensor (33) wobei der Drucksensor (33) in einer sich vom Hauptanschluss (20) zum Ausfallbremsanschluss (22) gerichteten Strömungsrichtung (SR) hinter dem ersten und dem zweiten Ausfallbremsventil (40, 60) angeordnet ist.

4. Ausfallsicherheitsventileinheit (1) nach einem der vorherigen Ansprüche, weiter aufweisend ein Druckbegrenzungsventil (34) ausgebildet zum Begrenzen des ersten Drucks (pV) und/oder des Ausfallbremsdrucks (pN).

5. Ausfallsicherheitsventileinheit (1) nach einem der vorherigen Ansprüche, weiter aufweisend eine Ausfallbremsdruck-Einstelleinrichtung (80), ausgebildet zum steuerbaren Einstellen des Ausfallbremsdrucks (pN).

6. Ausfallsicherheitsventileinheit (1) nach Anspruch 5, **dadurch gekennzeichnet, dass** die Ausfallbremsdruck-Einstelleinrichtung (80) ausgebildet ist, den Ausfallbremsdruck (pN) in Abhängigkeit eines Betriebsprofils (880) einzustellen.

7. Ausfallsicherheitsventileinheit (1) nach Anspruch 5 oder 6, **dadurch gekennzeichnet, dass** die Ausfallbremsdruck-Einstelleinrichtung (80) als pneumatische Einstelleinrichtung (82) ausgebildet ist.

8. Ausfallsicherheitsventileinheit (1) nach einem der Ansprüche 5 oder 6, **dadurch gekennzeichnet, dass** die Ausfallbremsdruck-Einstelleinrichtung (80) als elektrische Einstelleinrichtung (86) ausgebildet ist.

9. Ausfallsicherheitsventileinheit (1) nach einem der Ansprüche 5 bis 8, weiter aufweisend eine Ventil-Steuereinheit (74, 74', 74"), wobei die Ventil-Steuereinheit (74, 74', 74") ausgebildet ist zum steuernden und/oder regelnden Einstellen der Ausfallbremsdruck-Einstelleinrichtung (80).

10. Ausfallsicherheitsventileinheit (1) nach einem der vorherigen Ansprüche, **dadurch gekennzeichnet, dass**
- der Hauptanschluss (20) zum Empfangen eines ausgesteuerten Feststell-Bremsdrucks (pFS) oder eines von diesem abgeleiteten Drucks (pFS') als erster Druck (p1) pneumatisch mit einer Feststellbremsfunktion (FFS) verbunden ist.

11. Ausfallsicherheitsventileinheit (1) nach Anspruch 10, **dadurch gekennzeichnet, dass**
- die Ausfallsicherheitsventileinheit (1) ein Auswahlventil (50) mit einem ersten Anschluss (50.1) aufweist, der zum Empfangen des ersten Drucks (p1), insbesondere mit der Feststellbremsfunktion (FFS), pneumatisch verbunden ist,
- mit einem zweiten Anschluss (50.2), der zum Empfangen eines weiteren Vorratsdrucks (pWV) als zweiter Druck (p2) pneumatisch mit einem weiteren Druckluftvorrat (450, 452, 454) verbunden ist, und
- mit einem dritten Anschluss (50.3), der pneumatisch mit dem Ausfallbremsventil (40) verbunden ist, wobei
- das Auswahlventil (50) ausgebildet ist, denjenigen von dem ersten und zweiten Anschluss (50.1, 50.2) pneumatisch mit dem dritten Anschluss (50.3) zu verbinden, an dem der höhere Druck (p1, p2) anliegt.

12. Ausfallsicherheitsventileinheit (1) nach einem der vorherigen Ansprüche, **dadurch gekennzeichnet, dass**
- der Ausfallbremsdruck (pN) als Steuerdruck (pS) für einen Achsmodulator (432, 434, 438) bereitgestellt wird, oder
- der Ausfallbremsdruck (pN) als Bremsdruck (pA) für einen Bremszylinder (440) bereitgestellt wird.

13. Elektronisch steuerbares pneumatisches Bremssystem (204) für ein Fahrzeug (200), insbesondere ein Nutzfahrzeug (202), aufweisend eine erste Steuereinheit (410) für ein Primärsystem (B1) und eine zweite Steuereinheit (420) für eine erste Rückfallebene (B2), wobei die erste Steuereinheit (410) und die zweite Steuereinheit (420) unabhängig voneinander mit Energie versorgt und/oder sich wenigstens teilweise gegenseitig in ihrer Funktion ersetzen können,
**gekennzeichnet durch**
eine Ausfallsicherheitsventileinheit (1) gemäß einem der vorherigen Ansprüche, wobei
- die Ausfallsicherheitsventileinheit (1) in einem separaten Ansteuerzweig (430) angeordnet ist und
- zur Bereitstellung eines Ausfallbremsdrucks (pN), insbesondere für einen Achsmodulator (434) oder für einen Bremszylinder (440), zum Auslösen einer Ausfallbremsung (BA) des Fahrzeugs (200) über einen Ausfallbremsanschluss (22) mit mindestens einem Betriebsbremszylinder (440) und/oder einer Betriebsbremskammer (444) pneumatisch verbindbar ist.

14. Elektronisch steuerbares pneumatisches Bremssystem (204) nach Anspruch 13, **dadurch gekennzeichnet, dass** die erste Steuereinheit (410) mit einem ersten Ausfallbremsventil (40) der Ausfallsicherheitsventileinheit (1) ansteuerbar verbunden ist und die zweite Steuereinheit (420) mit einem zweiten Ausfallbremsventil (60) der Ausfallsicherheitsventileinheit (1) ansteuerbar verbunden ist.

15. Elektronisch steuerbares pneumatisches Bremssystem (204) nach Anspruch 13 oder 14, aufweisend einen Druckluftspeicher (454), der einen ersten Druck (p1) bereitstellt, wobei der Druckluftspeicher (454) unabhängig von einem weiteren, dem Achsmodulator (434) für den Betrieb zugeordneten Druckluftvorrat (452) ist.

16. Fahrzeug (200), insbesondere Nutzfahrzeug (202) mit einem Bremssystem (204) nach einem der Ansprüche 13 bis 15.

17. Verfahren zum Betreiben eines Bremssystems (204) beziehungsweise eines Fahrzeuges (200) nach einem der Ansprüche 13 bis 16, aufweisend den Schritt:
- Vorhalten eines ersten Drucks (p1) in einer, pneumatisch in einem separaten Ansteuerzweig (430) angeordneten, Ausfallsicherheitsventileinheit (1),
**dadurch gekennzeichnet, dass**
- der erste Druck (p1) durch ein Ansteuern von mindestens einem ersten und einem zweiten, pneumatisch in Reihe geschalteten Ausfallbremsventil (40, 60) zurückgehalten wird, und
- im Fall eines Mehrfachfehlers (FM), insbesondere Doppelfehlers (FD), oder eines Diagnosefalls (FT) der erste Druck (p1), durch ein Unterbrechen des Ansteuerns der mindestens zwei Ausfallbremsventile (40, 60), als Ausfallbremsdruck (pN) mindestens einem Bremszylinder (440, 442) des Bremssystems (204) zur Auslösung einer Ausfallbremsung (BA) bereitgestellt wird.

18. Verfahren nach Anspruch 17, **dadurch gekennzeichnet, dass** das Unterbrechen des Ansteuerns durch ein Stromlosschalten des mindestens ersten und zweiten Ausfallbremsventils (40, 60) erfolgt.

19. Verfahren nach Anspruch 17 oder 18, **dadurch gekennzeichnet, dass** der Ausfallbremsdruck (pN) in Abhängigkeit eines Betriebsprofils (880) eingestellt wird.

20. Verfahren nach einem der Ansprüche 17 bis 19, **dadurch gekennzeichnet, dass**
- der Ausfallbremsdruck (pN) ein von einer Feststellbremsfunktion (FFS) ausgesteuerter Feststell-Bremsdruck (pFS) zum Belüften von Feststellbremszylindern (442) oder ein von diesem abgeleiteter Druck (pFS') ist.

21. Verfahren nach einem der Ansprüche 17 bis 20, **gekennzeichnet durch** einen Diagnoseablauf (AD) aufweisend den Schritt:
- Ermitteln des Ausfallbremsdrucks (pN), insbesondere mittels eines Drucksensors (84), am Ausfallbremsanschluss (22), wobei
- vor dem Unterbrechen des Bereitstellens des Signals (S1, S2) eine Druckaussteuerung im Betriebsbremssystem (510), insbesondere eine Bremsanforderung (AB) an einen Achsmodulator (432), angefordert wird.

22. Verfahren nach Anspruch 21, **dadurch gekennzeichnet, dass**
- der Diagnoseablauf (AD) während einer Betriebsbremsung (BB) des Betriebsbremssystems (510), insbesondere während einer vorhandenen Bremsanforderung (AB), durchgeführt wird, oder
- der Diagnoseablauf (AD) während eines Stillstands des Fahrzeugs (200) durchgeführt wird, wobei insbesondere eine Bremsanforderung (AB), insbesondere von einer externen Steuereinheit (418) und/oder einer Automatikbetrieb-Steuereinheit (464) generiert wird.

23. Verfahren nach Anspruch 21 oder 22, **dadurch gekennzeichnet, dass**
- die Bremsanforderung (AB) von einem Bremswertgeber (436) und/oder einer externen Steuereinheit (418) und/oder einer Automatikbetrieb-Steuereinheit (464) bereitgestellt wird, wobei insbesondere die Bremsanforderung (AB) über einen Fahrzeug-Datenbus (462) bereitgestellt wird und/oder die Bremsanforderung (AB) in Form eines CAN-Signals, insbesondere in Form eines XBR-Signals, ausgebildet ist.

24. Verfahren nach einem der Ansprüche 21 bis 23, **gekennzeichnet durch** die Schritte:
- Bereitstellen eines Signals (S1, S2, S3) für ein einzelnes Ventil (40, 60, 70, 72), insbesondere für ein einzelnes Ausfallbremsventil (40,60) oder ein einzelnes Bistabilventil (72),
- Ermitteln des Ausfallbremsdrucks (pN), insbesondere Plausibilisieren der Druckreaktion für das einzelne Ventil (40, 60, 70).

## Claims

1. Failure safety valve unit (1) for a failure brake function (FN) of an electronically controllable pneumatic brake system (204) for a vehicle (200), in particular a commercial vehicle (202), the brake system (204) having a first control unit (410) and a second control unit (420) which are supplied with energy independently of one another and/or can at least partially replace one another in terms of their function,
**characterized in that** the failure safety valve unit (1) comprises:
- a first failure brake valve (40) designed as a monostable valve and a second failure brake valve (60) designed as a monostable valve, and
- a valve main line (30) pneumatically connecting a main connection (20) providing a first pressure (p1) and a failure brake connection (22),
- the first failure brake valve (40) and the second failure brake valve (60) being pneumatically connected in series in the valve main line (30), and
- the first failure brake valve (40) being controllable by the first control unit (410) and the second failure brake valve (60) being controllable by the second control unit (420), and
- the failure brake valves (40, 60) being open in an open position (40A, 60A) in the non-activated state, in particular currentless state, such that the first pressure (p1) present at the main connection (20) is provided as a failure brake pressure (pN) at the failure brake connection (22) such that
- in the event of a fault (FF) and/or power failure (SF) and/or diagnosis (FT) of the control units (410, 420), failure braking (BA) of the vehicle (200) is triggered by the provision of the failure brake pressure (pN) at the failure brake connection (22) by the brake system (204);
the first failure brake valve (40) and the second failure brake valve (60) being designed as 3/2-way solenoid valves.

2. Failure safety valve unit (1) according to claim 1, further comprising a bistable valve (72) arranged in the valve main line (30), which valve is designed to switch between a first position (72A), in which it blocks the valve main line (30) or connects said line to a vent (72.3), and a second position (72B), in which it connects the valve main line (30).

3. Failure safety valve unit (1) according to any of the preceding claims, further comprising a pressure sensor (33), wherein the pressure sensor (33) is arranged downstream of the first and the second failure brake valve (40, 60) in a flow direction (SR) directed from the main connection (20) to the failure brake connection (22).

4. Failure safety valve unit (1) according to any of the preceding claims, further comprising a pressure-limiting valve (34) designed to limit the first pressure (pV) and/or the failure brake pressure (pN).

5. Failure safety valve unit (1) according to any of the preceding claims, further comprising a failure brake pressure setting device (80) designed to set the failure brake pressure (pN) in a controlled manner.

6. Failure safety valve unit (1) according to claim 5, **characterized in that** the failure brake pressure setting device (80) is designed to set the failure brake pressure (pN) as a function of an operating profile (880).

7. Failure safety valve unit (1) according to either claim 5 or claim 6,
**characterized in that** the failure brake pressure setting device (80) is designed as a pneumatic setting device (82).

8. Failure safety valve unit (1) according to any of claims 5 or 6,
**characterized in that** the failure brake pressure setting device (80) is designed as an electrical setting device (86).

9. Failure safety valve unit (1) according to any of claims 5 to 8, further comprising a valve control unit (74, 74', 74"), wherein the valve control unit (74, 74', 74") is designed to set the failure brake pressure setting device (80) using open-loop and/or closed-loop control.

10. Failure safety valve unit (1) according to any of the preceding claims, **characterized in that**
- the main connection (20) is pneumatically connected to a parking brake function (FFS) in order to receive a controlled parking brake pressure (pFS) or a pressure (pFS') derived therefrom as the first pressure (p1).

11. Failure safety valve unit (1) according to claim 10, **characterized in that**
- the failure safety valve unit (1) has a selection valve (50) having a first connection (50.1), which is pneumatically connected, in particular to the parking brake function (FFS), in order to receive the first pressure (p1),
- a second connection (50.2), which is pneumatically connected to a further compressed air supply (450, 452, 454) in order to receive a further supply pressure (pWV) as a second pressure (p2), and
- a third connection (50.3), which is pneumatically connected to the failure brake valve (40),
- the selection valve (50) being designed to pneumatically connect whichever of the first and the second connection (50.1, 50.2) at which the higher pressure (p1, p2) is present to the third connection (50.3).

12. Failure safety valve unit (1) according to any of the preceding claims, **characterized in that**
- the failure brake pressure (pN) is provided as a control pressure (pS) for an axle modulator (432, 434, 438), or
- the failure brake pressure (pN) is provided as a brake pressure (pA) for a brake cylinder (440).

13. Electronically controllable pneumatic brake system (204) for a vehicle (200), in particular a commercial vehicle (202), comprising a first control unit (410) for a primary system (B1) and a second control unit (420) for a first fallback level (B2), the first control unit (410) and the second control unit (420) being supplied with energy independently of one another and/or being able to at least partially replace one another in terms of their function,
**characterized by**
a failure safety valve unit (1) according to any of the preceding claims,
- the failure safety valve unit (1) being arranged in a separate actuation branch (430) and
- being pneumatically connectable via a failure brake connection (22) to at least one service brake cylinder (440) and/or a service brake chamber (444) in order to provide a failure brake pressure (pN), in particular for an axle modulator (434) or for a brake cylinder (440), to trigger failure braking (BA) of the vehicle (200).

14. Electronically controllable pneumatic brake system (204) according to claim 13, **characterized in that** the first control unit (410) is connected to a first failure brake valve (40) of the failure safety valve unit (1) in an actuatable manner, and the second control unit (420) is connected to a second failure brake valve (60) of the failure safety valve unit (1) in an actuatable manner.

15. Electronically controllable pneumatic brake system (204) according to either claim 13 or claim 14, comprising a compressed air reservoir (454) providing a first pressure (p1), wherein the compressed air reservoir (454) is independent of a further compressed air supply (452) assigned to the axle modulator (434) for operation.

16. Vehicle (200), in particular a commercial vehicle (202), comprising a brake system (204) according to any of claims 13 to 15.

17. Method for operating a brake system (204) or a vehicle (200) according to any of claims 13 to 16, comprising the step of:
- maintaining a first pressure (p1) in a failure safety valve unit (1) arranged pneumatically in a separate actuation branch (430),
**characterized in that**
- the first pressure (p1) is retained by actuating at least a first and a second failure brake valve (40, 60) connected pneumatically in series, and
- in the case of a multiple error (FM), in particular a double error (FD), or a diagnosis (FT), the first pressure (p1) is provided, by means of an interruption of the actuation of the at least two failure brake valves (40, 60), as a failure brake pressure (pN) to at least one brake cylinder (440, 442) of the brake system (204) in order to trigger failure braking (BA).

18. Method according to claim 17, **characterized in that** the interruption of the actuation takes place by de-energizing the at least first and second brake valves (40, 60).

19. Method according to either claim 17 or claim 18, **characterized in that** the failure brake pressure (pN) is set as a function of an operating profile (880).

20. Method according to any of claims 17 to 19, **characterized in that**
- the failure brake pressure (pN) is a parking brake pressure (pFS) controlled by a parking brake function (FFS) in order to ventilate parking brake cylinders (442) or is a pressure (pFS') derived therefrom.

21. Method according to any of claims 17 to 20, **characterized by** a diagnostic sequence (AD) comprising the step of:
- determining the failure brake pressure (pN), in particular by means of a pressure sensor (84), at the failure brake connection (22),
- pressure control in the service brake system (510), in particular a braking request (AB) to an axle modulator (432), being requested prior to the interruption of the provision of the signal (S1, S2).

22. Method according to claim 21, **characterized in that**
- the diagnostic sequence (AD) is carried out during service braking (BB) of the service brake system (510), in particular during an existing braking request (AB), or
- the diagnostic sequence (AD) is carried out during a standstill of the vehicle (200), a braking request (AB), in particular from an external control unit (418) and/or an automatic operating control unit (464), in particular being generated.

23. Method according to claim 21 or claim 22, **characterized in that**
- the braking request (AB) is provided by a brake value transmitter (436) and/or an external control unit (418) and/or an automatic operating control unit (464), in particular the braking request (AB) being provided via a vehicle data bus (462) and/or the braking request (AB) being in the form of a CAN signal, in particular in the form of an XBR signal.

24. Method according to any of claims 21 to 23, **characterized by** the steps of:
- providing a signal (S1, S2, S3) for an individual valve (40, 60, 70, 72), in particular for an individual failure brake valve (40, 60) or an individual bistable valve (72),
- determining the failure brake pressure (pN), in particular plausibility checking the pressure reaction for the individual valve (40, 60, 70).

## Revendications

1. Unité de soupapes de sécurité en cas de défaillance (1) pour une fonction de freinage en cas de défaillance (FN) d'un système de freinage (204) pneumatique pouvant être commandé électroniquement pour un véhicule (200), en particulier un véhicule utilitaire (202), dans laquelle le système de freinage (204) présente une première unité de commande (410) et une seconde unité de commande (420) qui sont alimentées en énergie indépendamment l'une de l'autre et/ou peuvent se substituer au moins partiellement réciproquement dans leur fonction,
**caractérisée en ce que** l'unité de soupapes de sécurité en cas de défaillance (1) présente :
- une première soupape de freinage en cas de défaillance (40) conçue sous forme de soupape monostable et une seconde soupape de freinage en cas de défaillance (60) conçue sous forme de soupape monostable, et
- une conduite principale de soupape (30) qui relie pneumatiquement un raccord principal (20) fournissant une première pression (p1) et un raccord de freinage en cas de défaillance (22),
- dans laquelle la première soupape de freinage en cas de défaillance (40) et la seconde soupape de freinage en cas de défaillance (60) sont montées pneumatiquement en série dans la conduite principale de soupape (30), et
- dans laquelle la première soupape de freinage en cas de défaillance (40) peut être commandée par la première unité de commande (410) et la seconde soupape de freinage en cas de défaillance (60) peut être commandée par la seconde unité de commande (420), et
- dans laquelle les soupapes de freinage en cas de défaillance (40, 60), dans l'état non commandé, en particulier non alimenté, sont ouvertes dans une position d'ouverture (40A, 60A) de telle sorte que la première pression (p1) appliquée au niveau du raccord principal (20) est fournie sous forme de pression de freinage en cas de défaillance (pN) au niveau du raccord de freinage en cas de défaillance (22), de telle sorte que,
- en cas de défaut (FF) et/ou en cas de défaillance de l'alimentation (SF) et/ou en cas de diagnostic (FT) des unités de commande (410, 420), un freinage en cas de défaillance (BA) du véhicule (200) est déclenché par le système de freinage (204) par l'intermédiaire de la fourniture de la pression de freinage en cas de défaillance (pN) au niveau du raccord de freinage en cas de défaillance (22) ;
dans laquelle la première soupape de freinage en cas de défaillance (40) et la seconde soupape de freinage en cas de défaillance (60) sont conçues sous forme de soupapes magnétiques à 3/2 voies.

2. Unité de soupapes de sécurité en cas de défaillance (1) selon la revendication 1, présentant en outre une soupape bistable (72) agencée dans la conduite principale de soupape (30) et conçue pour la commutation entre une première position (72A) qui verrouille la conduite principale de soupape (30) ou permet la liaison à une ventilation (72,3), et une seconde position (72B) qui permet la liaison à la conduite principale de soupape (30).

3. Unité de soupapes de sécurité en cas de défaillance (1) selon l'une des revendications précédentes, présentant en outre un capteur de pression (33), dans laquelle le capteur de pression (33) est agencé dans un sens d'écoulement (SR) orienté du raccord principal (20) vers le raccord de freinage en cas de défaillance (22), derrière la première et la seconde soupape de freinage en cas de défaillance (40, 60).

4. Unité de soupapes de sécurité en cas de défaillance (1) selon l'une des revendications précédentes, présentant en outre une soupape de limitation de pression (34) conçue pour la limitation de la première pression (pV) et/ou de la pression de freinage en cas de défaillance (pN).

5. Unité de soupapes de sécurité en cas de défaillance (1) selon l'une des revendications précédentes, présentant en outre un dispositif de réglage de pression de freinage en cas de défaillance (80), conçu pour le réglage pouvant être commandé de la pression de freinage en cas de défaillance (pN).

6. Unité de soupapes de sécurité en cas de défaillance (1) selon la revendication 5, **caractérisée en ce que** le dispositif de réglage de pression de freinage en cas de défaillance (80) est conçu pour régler la pression de freinage en cas de défaillance (pN) en fonction d'un profil de fonctionnement (880).

7. Unité de soupapes de sécurité en cas de défaillance (1) selon la revendication 5 ou 6, **caractérisée en ce que** le dispositif de réglage de pression de freinage en cas de défaillance (80) est conçu sous forme de dispositif de réglage pneumatique (82).

8. Unité de soupapes de sécurité en cas de défaillance (1) selon l'une des revendications 5 ou 6, **caractérisée en ce que** le dispositif de réglage de pression de freinage en cas de défaillance (80) est conçu sous forme de dispositif de réglage électrique (86).

9. Unité de soupapes de sécurité en cas de défaillance (1) selon l'une des revendications 5 à 8, présentant en outre une unité de commande de soupape (74, 74', 74"), dans laquelle l'unité de commande de soupape (74, 74', 74") est conçue pour le réglage de commande et/ou de régulation du dispositif de réglage de pression de freinage en cas de défaillance (80).

10. Unité de soupapes de sécurité en cas de défaillance (1) selon l'une des revendications précédentes, **caractérisée en ce que**
- le raccord principal (20) est relié pneumatiquement à une fonction de freinage de stationnement (FFS) pour la réception, en tant que première pression (p1), d'une pression de freinage de stationnement (pFS) commandée ou d'une pression (pFS') dérivée de celle-ci.

11. Unité de soupapes de sécurité en cas de défaillance (1) selon la revendication 10, **caractérisée en ce que**
- l'unité de soupapes de sécurité en cas de défaillance (1) présente une soupape de sélection (50) comportant un premier raccord (50,1) relié pneumatiquement, en particulier à la fonction de freinage de stationnement (FFS), pour la réception de la première pression (p1),
- comportant un deuxième raccord (50,2) relié pneumatiquement à un réservoir d'air sous pression supplémentaire (450, 452, 454) pour la réception d'une pression de réserve supplémentaire (pWV) comme seconde pression (p2), et
- comportant un troisième raccord (50,3) relié pneumatiquement à la soupape de freinage en cas de défaillance (40), dans laquelle
- la soupape de sélection (50) est conçue pour relier pneumatiquement celui du premier et du deuxième raccord (50,1, 50,2) au troisième raccord (50,3) au niveau duquel la pression (p1, p2) la plus élevée est appliquée.

12. Unité de soupapes de sécurité en cas de défaillance (1) selon l'une des revendications précédentes, **caractérisée en ce que**
- la pression de freinage en cas de défaillance (pN) est fournie comme pression de commande (pS) pour un modulateur d'essieu (432, 434, 438), ou
- la pression de freinage en cas de défaillance (pN) est fournie comme pression de freinage (pA) pour un cylindre de frein (440).

13. Système de freinage (204) pneumatique pouvant être commandé électroniquement pour un véhicule (200), en particulier un véhicule utilitaire (202), présentant une première unité de commande (410) pour un système primaire (B1) et une seconde unité de commande (420) pour un premier plan de retour (B2), dans lequel la première unité de commande (410) et la seconde unité de commande (420) sont alimentées en énergie indépendamment l'une de l'autre et/ou peuvent se substituer au moins partiellement réciproquement dans leur fonction,
**caractérisé par**
une unité de soupapes de sécurité en cas de défaillance (1) selon l'une des revendications précédentes, dans lequel
- l'unité de soupapes de sécurité en cas de défaillance (1) est agencée dans une branche de commande (430) séparée et
- peut être reliée pneumatiquement à au moins un cylindre de frein de service (440) et/ou une chambre de frein de service (444) pour la fourniture d'une pression de freinage en cas de défaillance (pN), en particulier pour un modulateur d'essieu (434) ou pour un cylindre de frein (440), afin de déclencher un freinage en cas de défaillance (BA) du véhicule (200) par l'intermédiaire d'un raccord de freinage en cas de défaillance (22).

14. Système de freinage (204) pneumatique pouvant être commandé électroniquement selon la revendication 13, **caractérisé en ce que** la première unité de commande (410) est reliée à une première soupape de freinage en cas de défaillance (40) de l'unité de soupapes de sécurité en cas de défaillance (1) de manière à pouvoir être commandée, et la seconde unité de commande (420) est reliée à une seconde soupape de freinage en cas de défaillance (60) de l'unité de soupapes de sécurité en cas de défaillance (1) de manière à pouvoir être commandée.

15. Système de freinage (204) pneumatique pouvant être commandé électroniquement selon la revendication 13 ou 14, présentant un accumulateur d'air comprimé (454) qui fournit une première pression (p1), dans lequel l'accumulateur d'air comprimé (454) est indépendant d'un réservoir d'air sous pression supplémentaire (452) associé au modulateur d'essieu (434) pour le fonctionnement.

16. Véhicule (200), en particulier véhicule utilitaire (202), comportant un système de frein (204) selon l'une des revendications 13 à 15.

17. Procédé permettant de faire fonctionner un système de freinage (204) ou un véhicule (200) selon l'une des revendications 13 à 16, présentant l'étape de :
- conservation d'une première pression (p1) dans une unité de soupapes de sécurité en cas de défaillance (1) agencée pneumatiquement dans une branche de commande (430) séparée,
**caractérisé en ce que**
- la première pression (p1) est retenue par une commande d'au moins une première et une seconde soupape de freinage en cas de défaillance (40, 60) montées pneumatiquement en série, et
- en cas de défauts multiples (FM), en particulier de défauts doubles (FD), ou en cas de diagnostic (FT), la première pression (p1) est fournie, par une interruption de la commande des au moins deux soupapes de freinage en cas de défaillance (40, 60), en tant que pression de freinage en cas de défaillance (pN) à au moins un cylindre de frein (440, 442) du système de freinage (204) pour le déclenchement d'un freinage en cas de défaillance (BA).

18. Procédé selon la revendication 17, **caractérisé en ce que** l'interruption de la commande est effectuée par une coupure de l'alimentation des au moins première et seconde soupapes de freinage en cas de défaillance (40, 60).

19. Procédé selon la revendication 17 ou 18, **caractérisé en ce que** la pression de freinage en cas de défaillance (pN) est réglée en fonction d'un profil de fonctionnement (880).

20. Procédé selon l'une des revendications 17 à 19, **caractérisé en ce que**
- la pression de freinage en cas de défaillance (pN) est une pression de freinage de stationnement (pFS) commandée par une fonction de freinage de stationnement (FFS) pour la ventilation de cylindres de frein de stationnement (442), ou est une pression (pFS') dérivée de celle-ci.

21. Procédé selon l'une des revendications 17 à 20, **caractérisé par** un déroulement de diagnostic (AD) présentant l'étape de :
- détermination de la pression de freinage en cas de défaillance (pN), en particulier par le biais d'un capteur de pression (84), au niveau du raccord de freinage en cas de défaillance (22), dans lequel
- avant l'interruption de la fourniture du signal (S1, S2), une commande de pression dans le système de freinage de service (510), en particulier une demande de freinage (AB), est demandée à un modulateur d'essieu (432).

22. Procédé selon la revendication 21, **caractérisé en ce que**
- le déroulement de diagnostic (AD) est réalisé durant un freinage de service (BB) du système de freinage de service (510), en particulier durant une demande de freinage (AB) existante, ou
- le déroulement de diagnostic (AD) est réalisé durant un temps d'arrêt du véhicule (200), dans lequel, en particulier, une demande de freinage (AB) est générée, en particulier par une unité de commande externe (418) et/ou une unité de commande à fonctionnement automatique (464).

23. Procédé selon la revendication 21 ou 22, **caractérisé en ce que**
- la demande de freinage (AB) est fournie par un transducteur de valeur de freinage (436) et/ou par une unité de commande externe (418) et/ou par une unité de commande à fonctionnement automatique (464), dans lequel, en particulier, la demande de freinage (AB) est fournie par l'intermédiaire d'un bus de données de véhicule (462) et/ou la demande de freinage (AB) est réalisée sous forme de signal CAN, en particulier sous forme de signal XBR.

24. Procédé selon l'une des revendications 21 à 23, **caractérisé par** les étapes de :
- fourniture d'un signal (S1, S2, S3) pour une seule soupape (40, 60, 70, 72), en particulier pour une seule soupape de freinage en cas de défaillance (40, 60) ou une seule soupape bistable (72),
- détermination de la pression de freinage en cas de défaillance (pN), en particulier contrôle de plausibilité de la réponse à la pression pour la seule soupape (40, 60, 70).
